# EUROPÄISCHE PATENTSCHRIFT

(11) **EP 2 406 529 B1**
(45) Veröffentlichungstag und Bekanntmachung des Hinweises auf die Patenterteilung: **26.12.2012**
(21) Anmeldenummer: 10708523.5
(22) Anmeldetag: 10.03.2010
(51) Int. Cl.: E03C 1/04, E03C 1/05, F16K 31/46, F16K 31/60

(54) **EINHEBELMISCHGETRIEBE FÜR EINE WASSERARMATUR**
SINGLE-LEVER MIXING GEAR FOR A PLUMBING FIXTURE
MELANGEUR A LEVIER UNIQUE POUR UN ROBINET D'EAU

(30) Priorität: 10.03.2009 DE 102009001443
(43) Veröffentlichungstag der Anmeldung: 18.01.2012
(73) Patentinhaber: CeramTec GmbH, 73207 Plochingen (DE)
(72) Erfinder: LEINEN, Josef, 54516 Wittlich (DE)
(74) Vertreter: Scherzberg, Andreas Hans
(86) Internationale Anmeldenummer: PCT/EP2010/053019
(87) Internationale Veröffentlichungsnummer: WO 2010/103033

(56) Entgegenhaltungen:
- DE-U1- 9 103 698
- US-A1- 2004 200 987
- US-A1- 2007 028 975
- US-A1- 2007 289 646

## Beschreibung

Die Erfindung betrifft eine Wasserarmatur und eine Einhebelmischgetriebe für die Wasserarmatur zur Abgabe von Wasser in eine Sanitäreinrichtung, wobei die Wasserarmatur in der Regel einen auf die Sanitäreinrichtung aufgesetzten Armaturenkörper mit einer Einrichtung zur Betätigung des Einhebelmischgetriebes umfasst und das Einhebelmischgetriebe einen Kaltwasser- und einen Heißwasserzufluss, Einrichtungen zum Öffnen und Schließen der Zuflüsse sowie zum Mischen und Begrenzen der Wasserströme und einen Mischwasserauslauf enthält.

Herkömmliche Einhebel-Wasserarmaturen, wie sie bei Sanitäreinrichtungen, insbesondere auf Waschtischen, Bidets oder auf Wannen, eingesetzt werden, enthalten eine so genannte Kartusche, in der die der Wasserarmatur zugeführten Kalt- und Heißwasserströme zum Auslauf in diese Sanitäreinrichtungen freigegeben oder abgesperrt und miteinander gemischt werden. Dadurch, dass die Kartuschen in diesen Wasserarmaturen eingebaut sind, haben diese Wasserarmaturen einen Durchmesser und eine Höhe, die durch diese Kartuschen vorgegeben wird und, in Abhängigkeit der Größe der Kartusche, nicht unterschritten werden kann. Dadurch wirken diese Wasserarmaturen klobig. In den letzten Jahren geht der Trend dahin, dass das einst funktional eingerichtete Badezimmer in einen so genannten Wellnessbereich umgestaltet wird, wobei das Design der Objekte immer mehr Bedeutung erhält. Bei der Gestaltung der Wasserarmaturen sind den Designern aber aus dem oben genannten Grund Grenzen gesetzt. Des Weiteren ist die Formgebung der Keramikteile der Kartuschen, insbesondere die der Durchbrüche der Steuerscheiben, häufig kompliziert und deshalb schwierig herzustellen.

DE 91 03 698 U1, als nächstliegender Stand der Technik, beschreibt ein Einhebelmischgetriebe nach dem Oberbegriff des Anspruchs 1.

US 2007/028975 A1, US 2007/289646 A1 und US 2004/200987 A1 zeigen verschiedene Einhebelmischgetriebe für Wasserarmaturen.

Der Erfindung liegt deshalb die Aufgabe zu Grunde, eine Wasserarmatur und ein Einhebelmischgetriebe vorzustellen, das aus einfach gestalteten Teilen gefertigt ist und das, im Gegensatz zu einer Kartusche, die Gestaltung des Armaturenkörpers der Wasserarmatur nicht behindert.

Die Lösung der Aufgabe erfolgt mit Hilfe der kennzeichnenden Merkmale des ersten Anspruchs. Vorteilhafte Ausgestaltungen der Erfindung werden in den abhängigen Ansprüchen beansprucht.

Erfindungsgemäß sind das Einhebelmischgetriebe und der Armaturenkörper der Wasserarmatur voneinander räumlich getrennt. Das Einhebelmischgetriebe und die auf dem Armaturenkörper angeordnete Einrichtung zur Betätigung des Einhebelmischgetriebes können mechanisch miteinander gekoppelt sein oder es ist eine elektrisch betriebene Betätigung, beispielsweise durch Motore, vorgesehen. Der Armaturenkörper kann in herkömmlicher Weise auf der Sanitäreinrichtung, einem Waschtisch oder einem Bidet oder auf einer Wanne oder, wie bei einer Dusche, an oder in der Wand angeordnet sein, während das Einhebelmischgetriebe räumlich davon entfernt angeordnet ist, beispielsweise unterhalb oder oberhalb der Sanitäreinrichtung.

Diese Möglichkeit der freien Anordnung eines Einhebelmischgetriebes gibt dem Designer freie Hand in der Gestaltung des Armaturenkörpers. Außerdem ist das Einhebelmischgetriebe vor Wasserzutritt von außen und vor Reinigungsmitteln geschützt, was den Verschleiß vermindert und die Lebensdauer erhöht. Durch diesen Schutz ist ein Wechsel eines Einhebelmischgetriebes problemlos möglich. Bei herkömmlichen Wasserarmaturen ist auf Grund von Kalkablagerungen sowie der Korrosion von Gewinden und Dichtungen ein Wechsel einer Kartusche oft nicht mehr möglich, so dass die gesamte Wasserarmatur ausgewechselt werden muss.

Das erfindungsgemäße Einhebelmischgetriebe enthält drei herkömmliche Absperrorgane, wie sie zum Öffnen und Schließen von Wasserentnahmestellen oder zum Absperren von Leitungen genutzt werden. Es werden sowohl Ventile, bei denen im Schließzustand ein Ventilteller auf dem Ventilsitz aufliegt, verwendet als auch Absperrorgane, in denen zwei aufeinanderliegende Keramikscheiben mit Öffnungen zum Öffnen und Schließen gegeneinander verdreht werden. Im Schließzustand des Absperrorgans überdecken die Scheiben die Öffnungen gegeneinander, beim Öffnen werden die Öffnungen in den Scheiben zur Deckung gebracht. Ihrem Aufbau entsprechend gleichen sie damit Schiebern. Diese bewährte und zuverlässige Technik wird schon seit Jahrzehnten in der Sanitärbranche für Zweigriffarmaturen eingesetzt.

Weil für die Funktion des Einhebelmischgetriebes die Bauart des Absperrorgans nicht auf die beschriebene Bauart festgelegt ist, beispielsweise können auch Kugelhähne verwendet werden, wird nachfolgend nur noch der Begriff Absperrorgan verwendet.

Die Betätigung des Einhebelmischgetriebes erfolgt nicht mehr über einen Kipphebel, wie er aus einer herkömmlichen Kartusche herausragt. Aus dem erfindungsgemäßen Einhebelmischgetriebe ragt bei einer direkten manuellen Betätigung ein Stift, über den bei einer Auf- bzw. Abwärtsbewegung der Mengenfluss bis zum Wasserstopp und bei einer Drehbewegung die Mischtemperatur gesteuert wird. Allerdings bleiben für den Bediener, je nach Ausführungsbeispiel, die von ihm bei der Betätigung einer Wasserarmatur mit Kartusche gewohnten Handgriffe erhalten: eine Kippbewegung oder eine Auf- und Abbewegung für die Steuerung des Volumenstroms und eine Links- oder Rechtsdrehung für die Einstellung der Temperatur des Mischwassers.

Der aus dem Einhebelmischgetriebe ragende Stift kann mechanisch direkt mit der auf dem Armaturenkörper angeordneten Einrichtung zur Betätigung des Einhebelmischgetriebes, einem Betätigungshebel oder Betätigungsgriff, verbunden sein. Es kann aber auch eine elektrisch betriebene Betätigung vorgesehen sein, die beispielsweise über den Betätigungshebel oder über Schalter oder Sensoren ein- und ausgeschaltet wird. Der Vorteil gegenüber herkömmlichen berührungslos gesteuerten Wasserarmaturen mit Magnetventil ist, das die maximale Wassermenge nicht schlagartig am Auslauf ansteht oder gestoppt wird, sondern langsam ansteigt bzw. langsam abnimmt, so dass ein Spritzen in der Sanitäreinrichtung verhindert wird.

Das Einhebelmischgetriebe kann direkt auf die Anschlüsse der Hausversorgung aufgesetzt sein. Es kann aber auch an der Wand des Raumes befestigt oder unterhalb, neben oder sogar oberhalb der Sanitäreinrichtung angeordnet sein. Das Einhebelmischgetriebe kann auch an dem Armaturenkörper oder an der Sanitäreinrichtung mit einem Verbindungsteil, durch die Sanitäreinrichtung voneinander getrennt, befestigt sein. Dieses Verbindungsteil ist so gestaltet, dass es an der Sanitäreinrichtung oder an dem sich durch die Sanitäreinrichtung hindurch erstreckenden Sockel des Armaturenkörpers befestigt werden kann. Das Verbindungsteil kann sich auch durch die Sanitäreinrichtung hindurch erstrecken, so dass der Armaturenkörper darauf aufgesetzt werden kann.

Das Verbindungsteil kann so gestaltet sein, dass ein Abstand zwischen Sanitäreinrichtung und Einhebelmischgetriebe besteht, der den Anschluss des Stifts zur Betätigung des Einhebelmischgetriebes an die auf dem Armaturenkörper angeordnete Einrichtung zur Betätigung des Einhebelmischgetriebes ermöglicht. Weiterhin ist der Anschluss der Leitung vom Mischwasserauslauf des Einhebelmischgetriebes an den Anschluss des Auslaufs des Armaturenkörpers möglich.

Ist ein elektromotorischer Antrieb vorgesehen, kann sich der Platzbedarf für das Einhebelmischgetriebe erhöhen. Es kann Platz für eine Speichereinrichtung für die elektrische Energie erforderlich sein, wenn kein Netzanschluss möglich ist.

Das Verbindungsteil kann beispielsweise wie ein liegendes U aussehen, wobei ein U-Schenkel das Einhebelmischgetriebe trägt und der andere Schenkel mit der Sanitäreinrichtung oder mit dem Armaturenkörper verbunden ist. Ein weiteres Beispiel für ein Verbindungsteil ist ein Rohr, das entsprechend große Öffnungen für die Durchführung der oben beschriebenen Anschlüsse bietet. Mit seinem oberen Ende ist das Verbindungsteil mit dem durch die Sanitäreinrichtung reichenden Sockel des Armaturenkörpers verschraubt, der damit auf der Sanitäreinrichtung fixiert ist. Der Sockel trägt mit dem Verbindungsteil das Einhebelmischgetriebe.

Besitzt die Sanitäreinrichtung einen von dem Armaturenkörper aus betätigbaren Verschluss ihres Ablaufs, so kann die dafür vorgesehene Betätigungsstange durch das Verbindungsteil hindurchgeführt werden.

Das Gehäuse eines erfindungsgemäßen Einhebelmischgetriebes ist so gestaltet, dass es alle für die Funktion erforderlichen Funktionselemente enthält. Es kann aus jedem geeigneten metallischen Werkstoff oder Kunststoff bestehen und ein bearbeiteter Block oder ein Spritzgussteil sein, das den Funktionselementen angepasst ist, die es enthält.

Vorteilhaft ist, dass zur Steuerung der Wasserströme herkömmliche Absperrorgane mit einfachem Aufbau eingesetzt werden, die beispielsweise eine Grundscheibe und eine gegenüber dieser zum Öffnen und Schließen drehbar angeordnete Steuerscheibe oder heb- und senkbare Ventilteller enthalten. Jeweils ein Absperrorgan ist in den Heißwasserzufluss und in den Kaltwasserzufluss zur Regelung der Mischtemperatur des Wassers und in den Mischwasserauslauf des Einhebelmischgetriebes zur Mengenregelung und zum Absperren des Mischwasserauslaufs eingebaut.

Die Betätigung der Absperrorgane kann bei Handbetätigung über eine zentrale Spindel, die Betätigungsspindel, erfolgen, die verzahnt ist und mit ihrer Verzahnung in mit den Absperrorganen verbundene Zahnräder eingreift. Auf dieser Betätigungsspindel sind die Verzahnung für die Zahnräder der Absperrorgane in den Zuflüssen und die Verzahnung für das Zahnrad des Absperrorgans in dem Mischwasserauslauf des Einhebelmischgetriebes getrennt voneinander angeordnet. Für die Umsetzung der Schwenkbewegung der Einrichtung zur Betätigung des Einhebelmischgetriebes zur Mengenbegrenzung in eine Drehbewegung ist die Verzahnung der Betätigungsspindel als Zahnstange ausgebildet, die sich mit dem Zahnrad des Absperrorgans im Mischwasserauslauf des Einhebelmischgetriebes im Eingriff befindet. Für die Umsetzung der horizontalen Hin- und Herbewegung der Einrichtung zur Betätigung des Einhebelmischgetriebes zur Einstellung der Mischtemperatur in eine Drehbewegung ist die Verzahnung als Zahnrad ausgebildet, das sich mit mindestens einem Zahnrad eines Absperrorgans im Zufluss des Einhebelmischgetriebes im Eingriff befindet. Die Verzahnung der Betätigungsspindel kann in die beiden Zahnräder der Absperrorgane der Zuflüsse eingreifen. Es können sich aber auch die beiden Zahnräder der Absperrorgane der Zuflüsse im Eingriff befinden, wobei sich dann die Verzahnung der Betätigungsspindel nur mit einem Zahnrad eines Absperrorgans im Eingriff befindet.

Die Wassermenge am Mischwasserauslauf und die Mischwassertemperatur können auf Maximal- bzw. Minimalwerte eingestellt werden, wenn mechanische Anschläge im Bereich der Schwenkbewegung oder Auf- und Abbewegung bzw. der Hin- und Herbewegung der Einrichtung zur Betätigung des Einhebelmischgetriebes oder im Bereich der Betätigungsspindel vorgesehen werden.

Durch diese Maßnahmen ist es vorteilhaft möglich, durch Begrenzung des Heißwasserzuflusses einen Verbrühschutz vorzusehen, die Mischtemperatur des Wassers in einem Bereich festzulegen und die ausfließende Wassermenge zu begrenzen.

Bei elektromotorischen Antrieben können die über die Zahnräder verbundenen Absperrorgane der Zuflüsse durch einen gemeinsamen Motor und das Absperrorgan am Mischwasserauslauf durch einen weiteren Motor unabhängig voneinander verstellt werden, wobei dann keine Betätigungsspindel erforderlich ist.

Bei einer Betätigung der Absperrorgane des Einhebelmischgetriebes durch Motore ist es möglich, das Öffnen und Schließen der Wasserarmatur durch Sensoren einzuleiten, die auf Berührung oder Annäherung reagieren. Die Mischtemperatur des Wassers kann durch Sensoren im Auslauf erfasst werden und bei einer Abweichung von einem voreingestellten Sollwert kann über eine Drehzahlvorgabe an den Motor, der die gekoppelten Absperrorgane des Kalt- und des Heißwasserzuflusses betätigt, die erforderliche Wassermenge der Zuflüsse eingestellt werden.

Ebenso kann über einen Durchflusssensor die Abgabe der Wassermenge durch eie Drehzahlregelung des Antriebsmotors des Absperrorgans im Mischwasserauslauf des Einhebelmischgetriebes geregelt werden.

Bei Schrittmotoren ist eine Vorgabe der Einstellung der strömenden Wassermenge mit der Anzahl der Schritte, der Drehwinkel oder Umdrehungen, möglich.

Sind in dem Heißwasserzufluss und in dem Kaltwasserzufluss des Einhebelmischgetriebes durch eine Spindel miteinander verbundene, wechselseitig verschließende Ventilteller als Absperrorgane vorgesehen, kann eine Mischwasserkammer mit einem darin angeordneten Ausdehnungskörper vorgesehen sein. Der Ausdehnungskörper ist mit der die Ventilteller betätigenden Spindel verbunden und regelt bei einer Änderung der Mischwassertemperatur durch Ausdehnung oder Kontraktion die Stellung der Ventilteller und dadurch die jeweiligen Wasserströme im Heißwasserzufluss und im Kaltwasserzufluss. Diese Thermostatregelung sorgt vorteilhaft für eine konstante Mischwassertemperatur am Auslauf der Wasserarmatur. Bei einer zu hohen Mischwassertemperatur, die zur gesundheitlichen Gefährdung führen könnte, oder bei Ausfall des Kaltwasserzuflusses kann der Heißwasserzufluss sogar vollständig abgesperrt werden.

Das Absperrorgan im Heißwasserzufluss und das Absperrorgan im Kaltwasserzufluss sind so miteinander gekoppelt, dass bei konstantem Druck in den Zuleitungen und konstanter Mischwassermenge, wie bei einer herkömmlichen Kartusche, bei einem Schließen des einen Zuflusses der andere Zufluss proportional geöffnet wird. Ist ein Zufluss vollständig geschlossen, ist der andere Zufluss vollständig geöffnet.

Bei geschlossenem Absperrorgan könnte der Fall eintreten, dass bei unterschiedlichen Drücken in dem Heißwasserzufluss und in dem Kaltwasserzufluss das Wasser aus dem Zufluss mit dem höheren Druck in den Zufluss mit dem niedrigeren Druck überströmt. Um das zu verhindern, kann in dem Heißwasserzufluss und in dem Kaltwasserzufluss jeweils ein Rückschlagventil eingebaut sein. Versucht das Wasser von einem Zufluss in den anderen Zufluss überzuströmen, schließt sich jeweils automatisch das beaufschlagte Rückschlagventil. Die Rückschlagventile können bei entsprechender Ausstattung sogar angesteuert werden. So können bei einer vollständigen Schließstellung der Einrichtung zur Betätigung des Einhebelmischgetriebes und damit einem geschlossenen Absperrorgan im Mischwasserauslauf die Rückschlagventile so angesteuert werden, dass ein Öffnen in jedem Fall verhindert wird und eine Freigabe der Rückschlagventile nur dann erfolgt, wenn das Absperrorgan geöffnet wird.

An Hand von Ausführungsbeispielen wird die Erfindung näher erläutert. Es zeigen:
- Figur 1: eine Sanitäreinrichtung mit einer Wasserarmatur in schematisierter Darstellung zur Erläuterung des Aufbaus und der Funktion eines erfindungsgemäßen Einhebelmischgetriebes, das direkt unterhalb des Armaturenkörpers angeordnet ist,
- Figur 2: ein Einhebelmischgetriebe, das unterhalb der Sanitäreinrichtung an
- der: Wand des Raumes befestigt und mit der Einrichtung zur Betätigung des Einhebelmischgetriebes über eine biegsame Welle verbunden ist,
- Figur 3: den Auslauf des Armaturenkörpers in die Sanitäreinrichtung in Höhe der Einrichtung zur Betätigung des Einhebelmischgetriebes im Schnitt,
- Figur 4: die Ansicht des Gehäuses eines ersten Ausführungsbeispiels eines Einhebelmischgetriebes mit dem eingezeichneten Schnittverlauf G-H-D-I, dargestellt in Figur 8,
- Figur 5: die Ansicht einer ersten Bauart eines Absperrorgans des Einhebelmischgetriebes, geschnitten,
- Figur 6: die Ansicht des Schnittverlaufs A-A durch die Steuerscheibe,
- Figur 7: die Ansicht des Schnittverlaufs B-B durch die Grundscheibe,
- Figur 8: die Ansicht des Schnittverlaufs G-H-D-1 durch die erste Bauart des Einhebelmischgetriebes,
- Figur 9: die Ansicht des Schnittverlaufs J-K-L-M durch das Einhebelmischgetriebe,
- Figur 10: die Ansicht des Schnittverlaufs C-D-E-F durch das Einhebelmischgetriebe,
- Figur 11: die Ansicht des Schnittverlaufs N-O-P-Q durch das Einhebelmischgetriebe,
- Figur 12: die Ansicht eines weiteren Ausführungsbeispiels eines Einhebelmischgetriebes im Schnitt nach dem in Figur 13 eingezeichneten Schnittverlauf C-C,
- Figur 13: die Ansicht des Schnittverlaufs A-A durch das Einhebelmischgetriebe, eingezeichnet in Figur 12,
- Figur 14: die Ansicht des Schnittverlaufs B-B durch das Einhebelmischgetriebe, eingezeichnet in Figur 12,
- Figur 15: die Ansicht einer zweiten Bauart eines Absperrorgans des Einhebelmischgetriebes, geschnitten,
- Figur 16: die Ansicht des Schnittverlaufs A-A durch die Steuerscheibe,
- Figur 17: die Ansicht des Schnittverlaufs B-B durch die Grundscheibe,
- Figur 18: die Ansicht des Schnittverlaufs durch ein weiteres Ausführungsbeispiel eines Einhebelmischgetriebes, das der ersten Bauart entspricht, wie sie in Figur 9 dargestellt ist, mit thermostatgeregelten Absperrorganen,
- Figur 19: ein Stellglied mit Absperrfunktion in dem Einhebelmischgetriebe nach Figur 18 und
- Figur 20: ein Ausführungsbeispiel eines Armaturenkörpers einer Wasserarmatur ohne Kartusche.

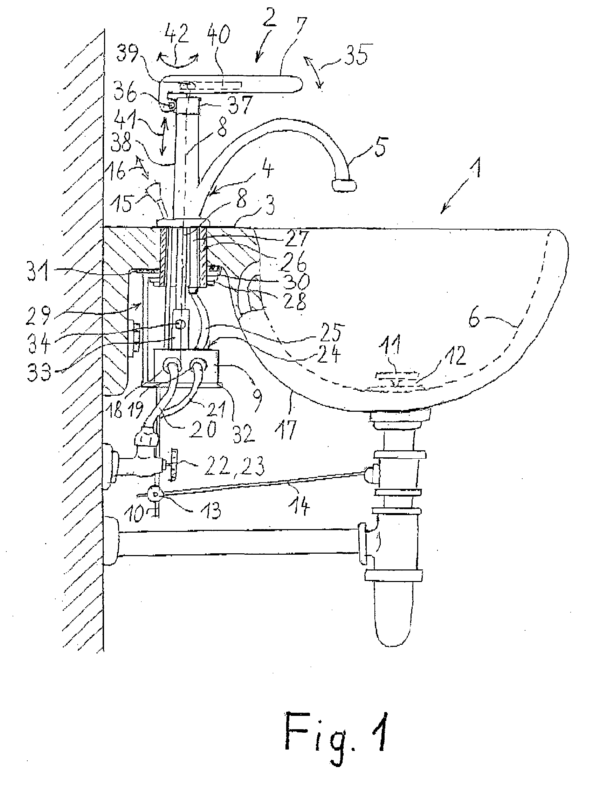

In Figur 1 ist als Sanitäreinrichtung ein Waschtisch 1 dargestellt, der mit einer Wasserarmatur 2 ausgestattet ist. Auf der Oberseite 3 des Waschtischs 1 ist der Armaturenkörper 4 der Wasserarmatur 2 aufgesetzt. Der Auslauf 5 mündet in das Becken 6 des Waschtischs 1, während der Betätigungshebel 7 über eine Verbindungsstange 8 mit dem erfindungsgemäßen Einhebelmischgetriebe 9 verbunden ist. Eine weitere Stange 10 dient der Betätigung des Verschlusses 11 im Ablauf 12 des Beckens 6. Die Stange 10 ist über ein Gelenk 13 mit einer weiteren Stange 14 verbunden, über die der Verschluss 11 zum Öffnen des Ablaufs 12 angehoben und zum Verschließen abgesenkt wird, wenn auf den Knauf 15 am über den Waschtisch 1 hinausreichenden Ende der Stange 10 gedrückt bzw. am Knauf 15 gezogen wird, wie mit dem Doppelpfeil 16 angedeutet wird. In der Darstellung ist der Ablauf 12 geöffnet.

Das erfindungsgemäße Einhebelmischgetriebe 9 ist auf der Unterseite 17 des Waschtischs 1 angeordnet, getrennt von dem Armaturenkörper 4 durch den Waschtisch 1. An das Einhebelmischgetriebe 9 sind der Heißwasser- 18 und der Kaltwasserzufluss 19 angeschlossen, die über Leitungen 20 bzw. 21 über die hier hintereinander liegenden Absperrhähne 22 bzw. 23 mit den Leitungen der Hausversorgung verbunden sind. Der Mischwasserauslauf 24 des Einhebelmischgetriebes 9, hier verdeckt, ist über eine Leitung 25 mit dem Auslauf 5 des Armaturenkörpers 4 verbunden.

Der Armaturenkörper 4 der Wasserarmatur 2, der auf der Oberseite 3 des Waschtischs 1 angeordnet ist, reicht mit einem Sockel 26 durch den Waschtisch 1 hindurch auf dessen Unterseite 17. Durch den Sockel 26 wird die Verbindungsstange 8 zur Betätigung des Einhebelmischgetriebes 9 geführt und die Zuleitung 27 zum Auslauf 5. An die Zuleitung 27 ist die Leitung 25 angeschlossen, die vom Mischwasserauslauf 24 des Einhebelmischgetriebes kommt. Der Sockel 26 trägt an seinem Ende ein Außengewinde und wird mit einer Mutter 28 an dem Waschtisch 1 befestigt.

Das Einhebelmischgetriebe 9 wird mit einem U-förmigen Verbindungsteil 29 an dem Waschtisch oder, wie in diesem Ausführungsbeispiel gezeigt, an dem Sockel 26 des Armaturenkörpers 4 der Wasserarmatur 2 befestigt. Dazu ist zwischen Mutter 28 und Waschtisch 1 der obere Schenkel 30 des U-förmigen Verbindungsteils 29 geklemmt. Eine zwischen Schenkel 30 und Waschtisch 1 liegende Dichtung 31, beispielsweise aus Gummi, sorgt für Abdichtung und Spannungsabbau. Das Einhebelmischgetriebe 9 ist auf dem unteren Schenkel 32 des Verbindungsteils 29 befestigt. Durch hier nicht dargestellte Positionierungshilfen, beispielsweise eine in die den Sockel 26 aufnehmende Öffnung des Schenkels 30 hineinreichende Zunge und eine entsprechende Nut im Sockel 26 kann ein lagerichtiger Einbau sichergestellt und ein Verdrehen des Einhebelmischgetriebes beim Betrieb vermieden werden.

Das Einhebelmischgetriebe 9 ist so unter dem Armaturenkörper 4 der Wasserarmatur 2 positioniert, dass eine direkte, lotrechte Verbindung der mit dem Betätigungshebel 7 verbundenen Verbindungsstange 8 mit dem Stift 33 zur Betätigung des Einhebelmischgetriebes 9 erfolgen kann. Dadurch ist die direkte Übertragung der Bewegungen des Betätigungshebels 7 durch die Verbindungsstange 8 auf den Stift 33 möglich. Die Verbindung des Stifts 33 mit der Verbindungsstange 8 erfolgt in Abstimmung auf die Länge der Verbindungsstange 8. Die Verbindungsstange 8 wird beispielsweise in den hohlen Stift 33 eingeschoben und mit diesem mit einem Splint 34 verbunden, der durch ein im Stift befindliches Loch und ein mit diesem in der Verbindungsstange 8 übereinstimmenden Loch geschoben wird, das eins von mehreren, übereinander angeordneten Löchern in der Verbindungsstange ist.

Der Betätigungshebel 7 des Armaturenkörpers 4 ist für die Schwenkbewegung, wie durch den Doppelpfeil 35 angedeutet, in einem Gelenk 36 an einem Abschlussteil 37 befestigt, was das Rohr 38 abschließt, in dem die Verbindungsstange 8 zur Betätigung des Einhebelmischgetriebes 9 geführt wird. Wird der Betätigungshebel 7 angehoben, wird das Ende 39 der Verbindungsstange 8 in dem Führungsschlitz 40 im Betätigungshebel 7 mitgenommen und die Verbindungsstange 8 wird nach oben gezogen, wodurch die Zuflüsse 18 und/oder 19 geöffnet werden, so dass Wasser aus dem Auslauf 5 fließt. Wird der Betätigungshebel 7 abgesenkt, werden die Zuflüsse geschlossen. Die Auf- und Abwärtsbewegung der Verbindungsstange 8 wird durch den Doppelpfeil 41 angedeutet. Wird der Betätigungshebel 7 mit dem drehbar auf dem Rohr 38 gelagerten Abschlussteil 37 geschwenkt, wie durch den Doppelpfeil 42 angedeutet, werden im Einhebelmischgetriebe 9 die Kalt- und Heißwasserströme miteinander entsprechend gemischt, so dass Wasser mit der der Stellung entsprechenden Mischtemperatur aus dem Auslauf 5 fließt.

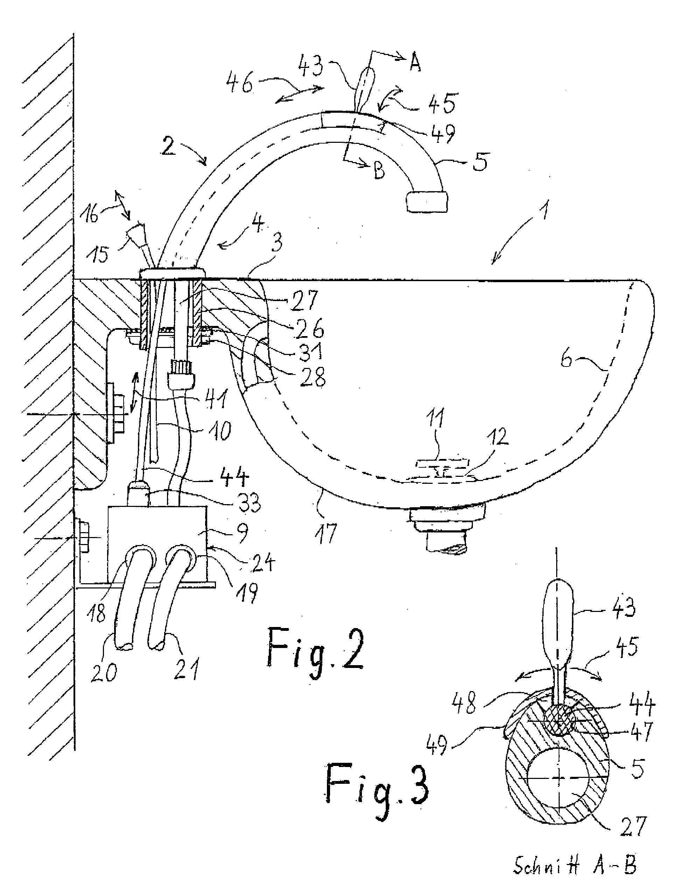

Eine andere Lösung, mit der die Öffnungs-, Schließ- und Mischbewegungen von einer Einrichtung zur Betätigung des Einhebelmischgetriebes auf dem Armaturenkörper auf das Einhebelmischgetriebe übertragen werden, ist in der Figur 2 dargestellt. Die mit dem vorhergehenden Ausführungsbeispiel in Figur 1 übereinstimmenden Merkmale sind mit denselben Bezugszeichen benannt.

Beim vorliegenden Ausführungsbeispiel erfolgt die Bewegungsübertragung von einem Betätigungsgriff 43 mittels einer Spirale mit biegsamer Welle 44 auf den Stift 33 zur Betätigung des Einhebelmischgetriebes 9. Mit einer Spirale mit biegsamer Welle ist es möglich, die Öffnungs-, Schließ- und Mischbewegungen auch dann zu übertragen, wenn der Betätigungsgriff und das Einhebelmischgetriebe versetzt zueinander angeordnet sind. Der Betätigungsgriff 43 ist schwenkbar, wie durch den Doppelfeil 45 angedeutet, und verschiebbar, wie durch den Doppelpfeil 46 angedeutet, in dem Auslauf 5 gelagert, der auch die Wasserzuleitung 27 enthält.

Die Figur 3, ein Schnittbild senkrecht zur Betrachterebene in Figur 2, wie durch den Schnittverlauf A - B angedeutet, zeigt, dass die Spirale mit biegsamer Welle 44 in einer rohrförmigen Führung 47 im Auslauf 5 gelagert ist. Der Betätigungsgriff 43 lässt sich in einem keilförmigen Schlitz 48 in dem Rücken des Auslaufs 5 zur Betätigung des Einhebelmischgetriebes 9 schwenken und verschieben. Der Schlitz 48 wird durch eine Abdeckung 49 vor Verschmutzung durch Wasser und Reinigungsmittel geschützt.

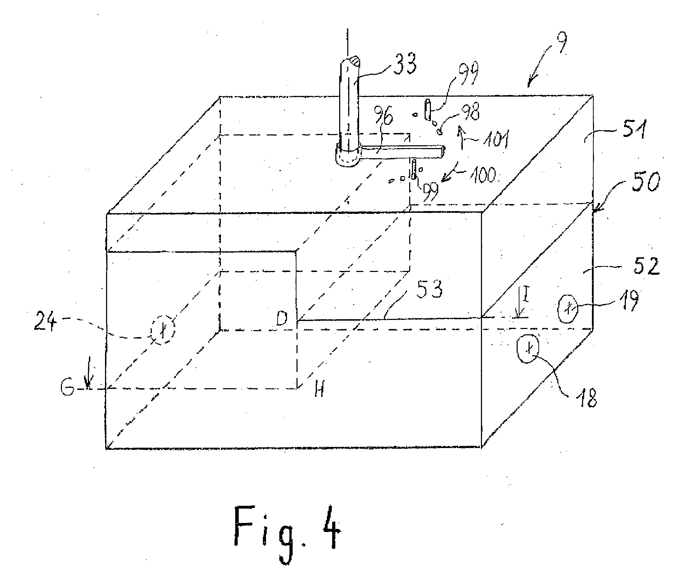

In Figur 4 ist schematisch eine Ansicht eines ersten Ausführungsbeispiels eines Einhebelmischgetriebes 9 dargestellt. Im vorliegenden Ausführungsbeispiel beinhaltet ein quaderförmiges Gehäuse 50 die in den folgenden Figuren dargestellten Funktionselemente. Je nach vorgesehener Art der Befestigung kann das Gehäuse entsprechend angeordnete Gewindebohrungen oder andere Befestigungselemente enthalten, was hier nicht dargestellt ist. Das Gehäuse 50 kann aus jedem geeigneten metallischen Werkstoff oder Kunststoff bestehen und ein bearbeiteter Block oder ein Spritzgussteil sein. Angedeutet sind der Zufluss 18 des Heißwassers und der Zufluss 19 des Kaltwassers, der Mischwasserauslauf 24 und der Stift 33 zur direktem manuellen Betätigung des Einhebelmischgetriebes. Das Gehäuse 50 ist in zwei Teile geteilt, um den Einbau der für die Funktion des Einhebelmischgetriebes erforderlichen Funktionselemente zu ermöglichen, ein Oberteil 51 und ein Unterteil 52. Um den Einbau der Funktionselemente zu erleichtern, verläuft die Trennebene 53 entsprechend ihrer Anordnung hier mit einem Absatz. Die Verbindung des Oberteils 51 mit dem Unterteil 52 kann beispielsweise in herkömmlicher Weise mittels einer Schraubverbindung erfolgen, was hier nicht dargestellt ist.

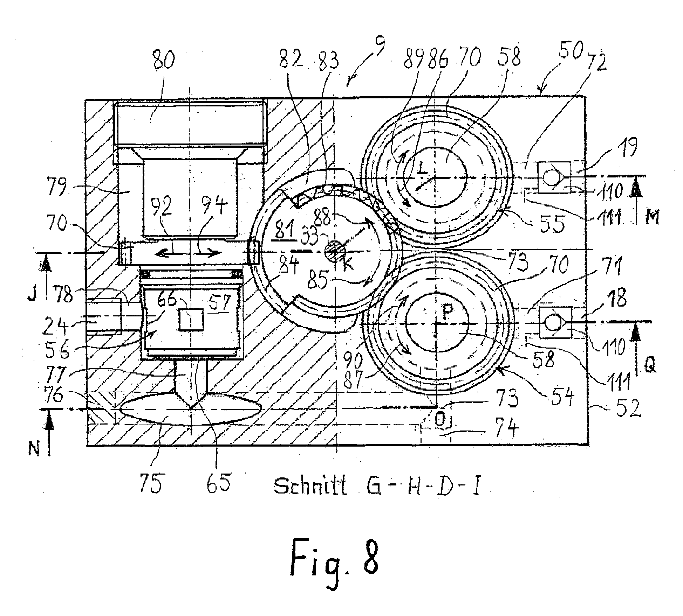

Eingezeichnet ist ein Schnittverlauf durch das Gehäuse 50 des Einhebelmischgetriebes 9, G-H-D-I, der in Figur 8 dargestellt ist.

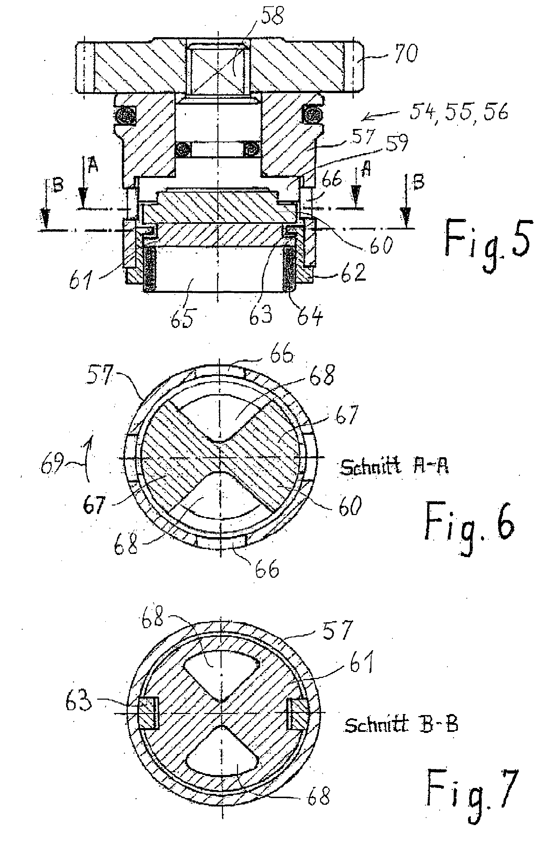

Die nachfolgenden Figuren 5 bis 7 zeigen den Aufbau einer ersten Bauart von einem der drei Absperrorgane im Einhebelmischgetriebe 9. Wie aus Figur 8 ersichtlich, sind im Einhebelmischgetriebe 9 des ersten Ausführungsbeispiels drei handelsübliche Absperrorgane eingesetzt, ein Absperrorgan 54 im Heißwasserzufluss 18, ein Absperrorgan 55 im Kaltwasserzufluss 19 und ein Absperrorgan 56 im Mischwasserauslauf 24 als Absperrorgan und zur Mengensteuerung.

In Figur 5 ist eines der Absperrorgane einer ersten Bauart im Schnitt dargestellt. In einem Gehäuse 57 ist eine Spindel 58 gelagert, die mit Mitnehmern 59 in eine Steuerscheibe 60 aus Keramik eingreift. Diese überdeckt eine Grundscheibe 61, die mittels einer Buchse 62 mit Haltenocken 63 in das Gehäuse 57 eingesetzt ist. Eine in die Buchse 62 eingeschobene ringförmige Dichtung 64 stützt die Grundscheibe 61 und dichtet die Zuflussöffnung 65 gegenüber einer angeschlossenen Leitung ab. Bei geöffnetem Absperrorgan strömt das Wasser durch eine oder mehrere sich gegenüberliegende Ausflussöffnungen 66 aus dem Gehäuse 57, das hier vier Ausflussöffnungen 66 enthält.

Der Schnitt A-A in Figur 5 ist durch die Steuerscheibe 60 gelegt und in Figur 6 dargestellt. Der Schnitt B-B in Figur 5 ist durch die Grundscheibe 61 gelegt und in Figur 7 dargestellt. Die Steuerscheibe 60 besteht aus zwei sich gegenüberliegenden Segmenten 67, während die Grundscheibe 61 zwei sich gegenüberliegende Durchbrüche 68 aufweist. Wie aus den beiden Figuren ersichtlich, ist das Absperrorgan geöffnet. In der Figur 6 steht die Steuerscheibe 60 so, dass ihre Segmente 67 die Durchbrüche 68 der Grundscheibe 61 freigeben. Durch eine Drehung um 90 Winkelgrade, beispielsweise in Pfeilrichtung 69, kann das Absperrorgan geschlossen werden, weil in dieser Stellung die beiden Segmente 67 die Durchbrüche 68 überdecken.

Auf die Spindel 58 ist ein Zahnrad 70 aufgesetzt. Durch weiter unten beschriebene Antriebe wird die Spindel 58 zum Öffnen und Schließen gedreht.

Die nachfolgenden Figuren zeigen Schnitte durch das Gehäuse 50 des Einhebelmischgetriebes 9 des ersten Ausführungsbeispiels, aus denen die Anordnung der für die Funktion des Einhebelmischgetriebes erforderlichen Funktionselemente ersichtlich ist.

Figur 8 zeigt eine Ansicht des in Figur 4 dargestellten Schnittverlaufs G-H-D-I durch das Gehäuse 50. Von rechts kommend liegt unten der Heißwasserzufluss 18 und darüber der Kaltwasserzufluss 19. In diesem Ausführungsbeispiel sind alle Wasserleitungen zu den einzelnen Funktionselementen als Bohrungen ausgeführt. Bei anderen Ausführungen des Gehäuses können es auch Röhrchen sein. Über die Bohrungen 71 bzw. 72 strömt das Wasser zu den jeweiligen Absperrorganen 54 bzw. 55, die in das Unterteil 52 eingesetzt sind. Eine von außen in das Gehäuse 50 eingebrachte Bohrung 73, die am Austritt aus dem Gehäuse mit einem Stopfen 74 verschlossen ist, verbindet die Ausflussöffnungen 66 der beiden Absperrorgane 54 und 55 und verbindet die Ausflussöffnungen 66 des Absperrorgans 54 mit einer weiteren Bohrung 75, die das Wasser zum Absperrorgan 56 leitet, dem Absperrorgan zum Absperren und zum Steuern der Wassermenge, das senkrecht zu den beiden Absperrorganen 54 und 55 angeordnet ist. Es kann aber auch das Absperrorgan 55 über eine anders geführte Bohrung 75 mit dem Absperrorgan 56 verbunden werden. Die ebenfalls von außen in das Gehäuse 50 eingebrachte Bohrung 75 ist am Austritt aus dem Gehäuse mit einem Stopfen 76 verschlossen. Eine von der Bohrung 75 abzweigende Bohrung 77 führt zur Zuflussöffnung 65 des Absperrorgans 56 und von dessen Ausflussöffnungen 66 in die Bohrung 78, die den Mischwasserauslauf 24 des Einhebelmischgetriebes 9 darstellt, der mit dem Auslauf der Wasserarmatur verbunden ist.

Das Absperrorgan 56 ist in eine Ausbohrung 79 des Gehäuses 50 eingesetzt und wird durch einen in diese Ausbohrung 79 eingeschraubten Verschluss 80 in seiner Position gehalten.

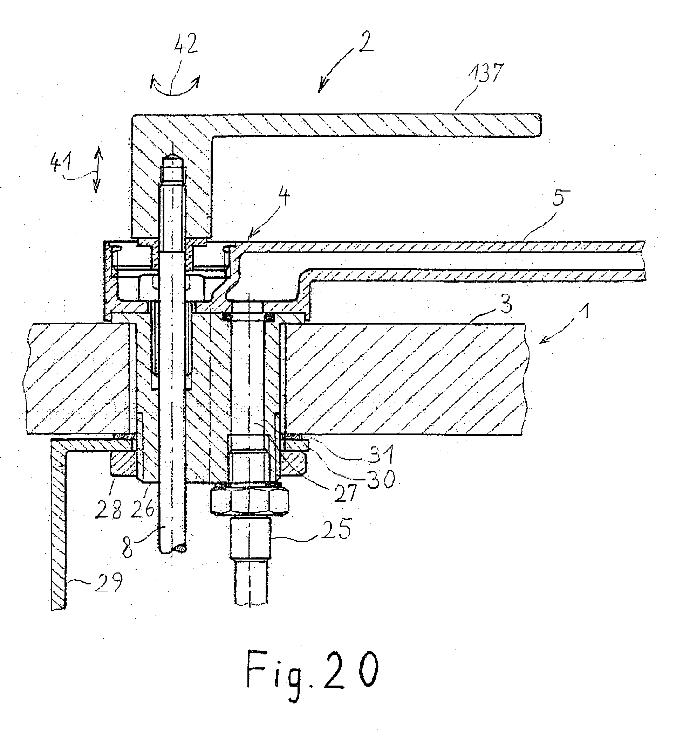

Im vorliegenden Ausführungsbeispiel erfolgt die Betätigung der Absperrorgane 54, 55 und 56 des Einhebelmischgetriebes 9 manuell. Im Einhebelmischgetriebe 9 ist im Gehäuse 50 zentral eine Betätigungsspindel 81 angeordnet. Der mit ihr verbundene Stift 33 ist beispielsweise mit einer Verbindungsstange 8 (Fig. 1, 20) oder einer Spirale mit biegsamer Welle 44 (Fig. 2) verbunden. Bei Betätigung des Betätigungshebels 7 oder 137 bzw. des Betätigungsgriffs 43 wird die Betätigungsspindel 81 angehoben oder abgesenkt oder geschwenkt und überträgt diese Bewegungen auf die Absperrorgane.

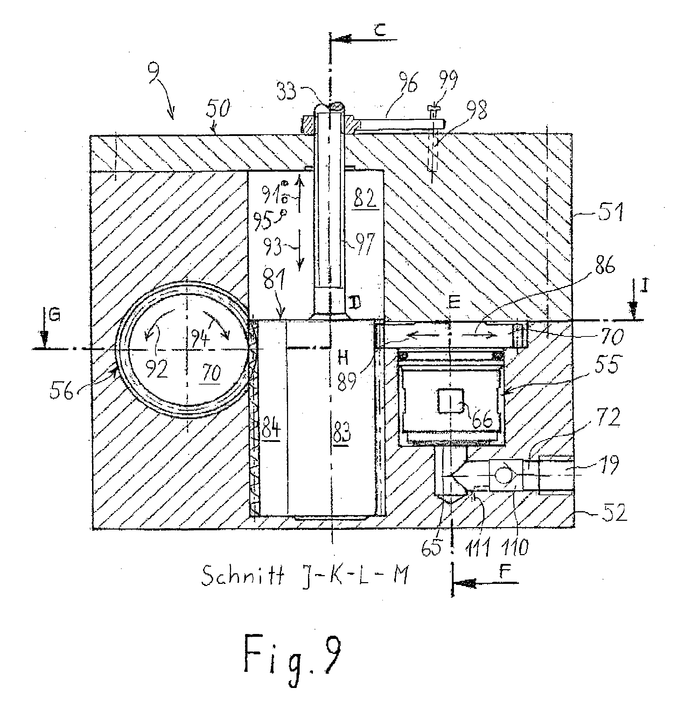

Auf den Spindeln 58 der Absperrorgane 54, 55 und 56 ist jeweils ein Zahnrad 70 befestigt. Die Betätigungsspindel 81 ist in eine entsprechend geformte Ausbohrung 82 im Gehäuse 50 eingesetzt. Die Betätigungsspindel 81 ist ein zylindrischer Körper, der auf gegenüberliegenden Seiten eine um 90 Winkelgrade gedrehte Verzahnung aufweist. Die Verzahnung 83, die mit den Zahnrädern 70 der beiden Absperrorgane 54 und 56, den Absperrorganen der Zuflüsse, im Eingriff steht, verläuft wie ein Zahnrad über die gesamte Höhe des zylindrischen Körpers, wie in Figur 9 dargestellt. Die mit dem Zahnrad 70 des Absperrorgans 56, des Absperrorgans für die Mengenbegrenzung, im Eingriff befindliche Verzahnung 84 ist wie eine gewölbte Zahnstange geformt. Wird die Betätigungsspindel 81 auf Grund einer Schwenkbewegung 42 des Betätigungshebels 7 oder 137 (Fig. 1) oder einer Schwenkbewegung 45 des Betätigungsgriffs 43 (Fig. 2) gedreht, überträgt sich diese Drehbewegung auf die beiden Zahnräder 70 der Spindeln 58 der Absperrorgane 54 und 55, während das Zahnrad 70 des Absperrorgans 56 nicht bewegt wird.

Geht man in Figur 8 von einer Mittelstellung des Betätigungshebels 7 oder 137 bzw. des Betätigungsgriffs 43 aus und wird die Betätigungsspindel 81 in Pfeilrichtung 85 zur Erhöhung der Heißwassermenge gedreht, dreht sich das Zahnrad 70 des Absperrorgans 55 in dem Kaltwasserzufluss 19 in Pfeilrichtung 86 und wird zunehmend geschlossen bis zum Wasserstopp. Das Zahnrad 70 des Absperrorgans 54 in dem Heißwasserzufluss 18 dreht sich in Pfeilrichtung 87 und öffnet das Absperrorgan 54 zunehmend bis zur vollständigen Öffnung.

Geht man von einer Mittelstellung des Betätigungshebels 7 oder 137 bzw. des Betätigungsgriffs 43 aus und wird die Betätigungsspindel 81 in Pfeilrichtung 88 zur Erhöhung der Kaltwassermenge gedreht, dreht sich das Zahnrad 70 des Absperrorgans 55 in dem Kaltwasserzufluss 19 in Pfeilrichtung 89 und wird zunehmend geöffnet bis zur vollständigen Öffnung. Das Zahnrad 70 des Absperrorgans 54 in dem Heißwasserzufluss 18 dreht sich in Pfeilrichtung 90 und schließt das Absperrorgan 54 zunehmend bis zum vollständigen Verschluss.

Voraussetzung für diese beschriebenen Öffnungs- und Schließvorgänge der Absperrorgane ist, dass beide bei gleicher Drehrichtung der Spindel entgegengesetzte Funktionen ausüben. Wird durch die Betätigungsspindel 81 das Zahnrad 70 und damit die Spindel 58 des Absperrorgans 55 in Pfeilrichtung 89 gedreht, wird das Absperrorgan 55 geöffnet. Durch das gleichzeitige Drehen der Spindel 58 des Absperrorgans 54 in Pfeilrichtung 90 wird dieses Absperrorgan geschlossen.

Wie aus der Beschreibung ersichtlich, ist bei einer Mittelstellung des Betätigungshebels 7 oder 137 oder des Betätigungsgriffs 43 sowohl das Absperrorgan 54 als auch das Absperrorgan 55 teilweise geöffnet. Über die Bohrung 73 stehen die beiden Absperrorgane in Verbindung. Bei geschlossenem Absperrorgan 56 könnte der Fall eintreten, dass bei einem unterschiedlichen Druck in dem Heißwasserzufluss 18 und in dem Kaltwasserzufluss 19 das Wasser aus dem Zufluss mit dem höheren Druck in den Zufluss mit dem niedrigeren Druck überströmt. Um das zu verhindern, ist in der Bohrungen 71 des Heißwasserzuflusses 18 und in der Bohrungen 72 des Kaltwasserzuflusses 19 jeweils ein Rückschlagventil eingebaut, wie durch das Symbol 110 angedeutet wird. Versucht das Wasser von einem Zufluss in den anderen Zufluss überzuströmen, schließt sich jeweils automatisch das beaufschlagte Rückschlagventil. Die Rückschlagventile 110 können bei entsprechender Ausstattung sogar elektrisch angesteuert werden, wie im Symbol entsprechend der Bezugsziffer 111 angedeutet wird. So können bei einer vollständigen Schließstellung des Betätigungshebels 7 oder des Betätigungsgriffs 43 und damit einem geschlossenen Absperrorgan 56 im Mischwasserauslauf 24 die Rückschlagventile 110 so angesteuert werden, dass ein Öffnen in jedem Fall verhindert wird und eine Freigabe der Rückschlagventile 110 nur dann erfolgt, wenn das Absperrorgan 56 geöffnet wird.

Die Wassermenge von Null bis maximalem Durchfluss wird durch das Absperrorgan 56 gesteuert. Wird aus der Schließstellung der Betätigungshebel 7 in Pfeilrichtung 35 (Fig. 1) und der Betätigungshebel 137 in Pfeilrichtung 41 (Fig. 20) angehoben bzw. der Betätigungsgriff 43 in Pfeilrichtung 46 nach vorne gezogen (Fig. 2), wird die Betätigungsspindel 81 in Figur 8 in Richtung des Betrachters und in Figur 9 in Pfeilrichtung 91 angehoben. Auf Grund der Verzahnung 84, in Form einer Zahnstange, wird das Zahnrad 70 des Absperrorgans 56 in Pfeilrichtung 92 gedreht und das Absperrorgan 56 wird zunehmend geöffnet bis zur vollständigen Öffnung und maximaler Mischwassermenge.

Wird aus der Stellung der vollständigen Öffnung des Absperrorgans 56 der Betätigungshebel 7 in Pfeilrichtung 35 (Fig. 1) und der Betätigungshebel 137 in Pfeilrichtung 41 (Fig. 20) abgesenkt bzw. der Betätigungsgriff 43 in Pfeilrichtung 46 nach hinten geschoben (Fig. 2), wird die Betätigungsspindel 81 in Figur 8 vom Betrachter weg und in Figur 9 in Pfeilrichtung 93 in die eingezeichnete Stellung abgesenkt. Das Zahnrad 70 des Absperrorgans 56 wird in Pfeilrichtung 94 gedreht und das Absperrorgan 56 wird zunehmend geschlossen bis zum Wasserstopp. Sowohl beim ausschließlichen Öffnen als auch beim ausschließlichen Schließen des Absperrorgans 56 werden die Absperrorgane 54 und 55 auf Grund der unterschiedlichen Verzahnung der Betätigungsspindel 81 nicht betätigt.

Bei einer Betätigung der Absperrorgane 54, 55 und 56 mit Motore wird der mechanische Aufbau des Einhebelmischgetriebes wesentlich einfacher. Die Betätigungsspindel 81 mit ihren Verzahnungen wäre dann überflüssig. Statt des Verschlusses 80 würde ein Motor direkt auf der Spindel des Absperrorgans 56 für die Mengenbegrenzung aufgesetzt. Das Zahnrad 70 entfällt. Das Zahnrad 70 des Absperrorgans 54 im Heißwasserzufluss 18 und das Zahnrad 70 des Absperrorgans 55 im Kaltwasserzufluss 19 würden in Eingriff gebracht und auf einer der Spindeln dieser Absperrorgane würde ein Motor aufgesetzt. Dieser Motor würde die Spindel des einen Absperrorgans betätigen, beispielsweise öffnen, und über die Zahnradverbindung das andere Absperrorgan im Gegensinn entsprechend schließen.

In Figur 9 ist die Ansicht des in Figur 8 eingezeichneten Schnittverlaufs J-K-L-M dargestellt. Die Betätigungsspindel 81 befindet sich in Schließstellung, d.h. das Absperrorgan 56 im Mischwasserauslauf 24 ist geschlossen, und in der Mittelposition, was die Mischung des Heiß- und des Kaltwasserstroms betrifft. Wie ersichtlich, umfasst die zahnradförmige Verzahnung den eingezeichneten Bereich 83 des zylindrischen Körpers und die zahnstangenförmige Verzahnung den eingezeichneten Bereich 84 der Betätigungsspindel 81. Bei Drehbewegungen um die eigene Achse werden nur die Zahnräder 70 der Absperrorgane 54 und 55 gedreht und diese Absperrorgane geöffnet oder geschlossen, während das Zahnrad 70 des Absperrorgans 56 auf Grund der zahnstangenförmigen Verzahnung 84 nicht bewegt wird.

Wird die Betätigungsspindel 81 in Pfeilrichtung 91 angehoben, wird über die zahnstangenförmige Verzahnung 84 das Zahnrad 70 des Absperrorgans 56 in Pfeilrichtung 92 gedreht und das Absperrorgan geöffnet. Die Hubhöhe der Betätigungsspindel 81 und damit die Mischwassermenge aus dem Einhebelmischgetriebe kann mechanisch begrenzt werden, wenn, wie hier angedeutet, die Möglichkeit besteht, in übereinander angeordnete Löcher in der Wand der Ausbohrung 82 überstehende Stifte 95 einzustecken oder Schrauben einzudrehen.

Eine vergleichbare Möglichkeit der Begrenzung der Wasserströme, die aus dem Absperrorgan 54 im Heißwasserzufluss 18 oder dem Absperrorgan 55 im Kaltwasserzufluss 19 ausströmen, ist ebenfalls in Figur 9 dargestellt und in Figur 4 in der Aufsicht zu sehen. Auf dem aus dem Einhebelmischgetriebe 9 herausragenden Stift 33, der mit der Betätigungsspindel 81 verbunden ist, ist ein zeigerförmiger Stab 96 verschiebbar angeordnet, so dass er nur bei Drehbewegungen der Betätigungsspindel 81 mitgenommen wird. Dazu kann beispielsweise eine zahnradförmige Verzahnung 97 auf dem Umfang des Stifts 33 vorgesehen sein. Im Schwenkbereich des Zeigers 96 können auf der Oberseite des Einhebelmischgetriebes 9 z. B. Löcher 98 vorgesehen sein, in die Stifte 99 eingesteckt oder Schrauben eingedreht werden können, um den Winkel zu begrenzen, um die die Betätigungsspindel 81 gedreht werden kann.

In Figur 4 ist eine Anordnung zur Begrenzung des Schwenkbereichs der Betätigungsspindel 81 dargestellt. Die Betätigungsspindel 81 steht in der Mittelstellung, so dass die beiden Absperrorgane 54 und 55 gleich weit geöffnet sind. Der Drehwinkel 100 zum Öffnen des Absperrorgans 54 für den Heißwasserzufluss 18 wird durch einen Stift 99 bereits früh gestoppt, um den Volumenstrom des Heißwasserzuflusses zu begrenzen, wodurch ein Verbrühen an zu heißem Wasser verhindert werden kann. Der Drehwinkel 101 für den Kaltwasserzufluss 19 über das Absperrorgan 55 dagegen ist größer. Wie hiermit dargestellt, kann durch die Veränderung der Drehwinkel der Betätigungsspindel 81 die Maximal- und Minimaltemperatur des Wassers am Auslauf individuell gesteuert werden, sofern die Temperaturen und Drücke des Wassers in den Zuflüssen konstant bleiben.

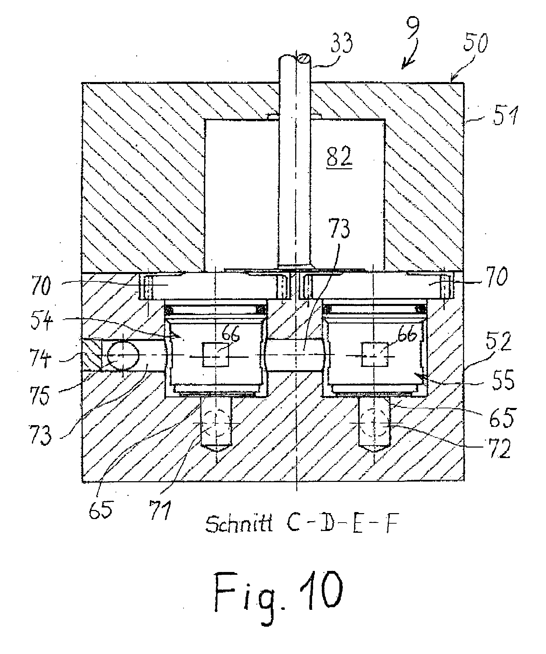

In Figur 10 ist die Ansicht des Schnittverlaufs C-D-E-F dargestellt, wie er in Figur 9 angegeben ist. Der Schnitt zeigt das Absperrorgan 54 im Heißwasserzufluss, Bohrung 71, und das Absperrorgan 55 im Kaltwasserzufluss, Bohrung 72. Die Betätigungsspindel 81 der beiden Absperrorgane ist in der Schließstellung und deshalb nicht zu sehen.

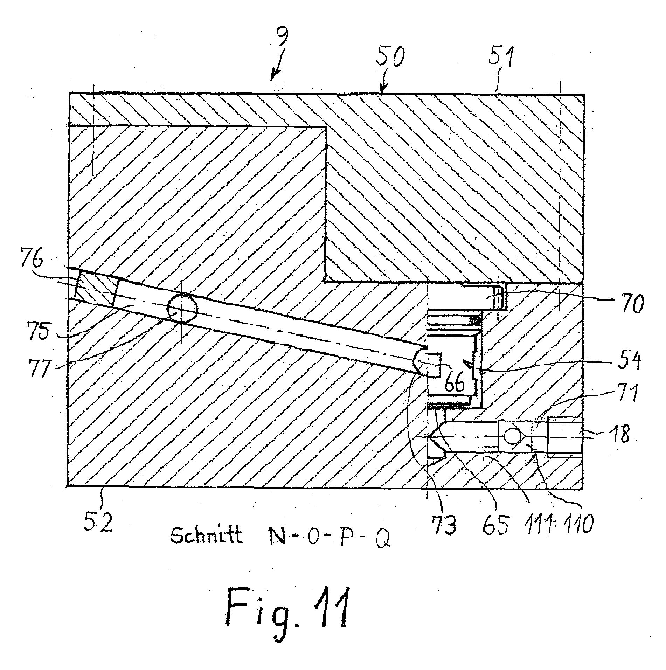

In Figur 11 kann an Hand des Schnittverlaufs N-O-P-Q der Weg des Wassers durch die Bohrungen im Unterteil 52 des Gehäuses 50 verfolgt werden, von dem Heißwasserzufluss 18 über die Bohrungen 73, 75 und 77 bis zum Absperrorgan 56 im Mischwasserauslauf, dem Absperrorgan zum Absperren und Steuern der Wassermenge.

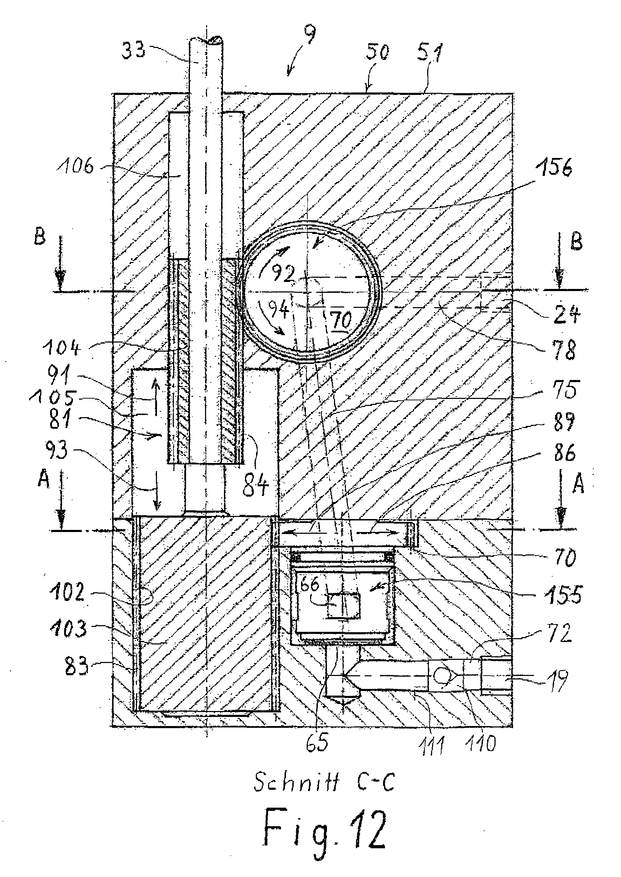

Die Figur 12 zeigt ein Einhebelmischgetriebe 9, das einen gegenüber dem vorhergehenden. Ausführungsbeispiel entsprechend der Figuren 8 bis 11 anderen Aufbau hat. Die Absperrorgane für den Heiß- und den Kaltwasserzufluss und das Absperrorgan für den Mischwasserauslauf sind übereinander angeordnet, wodurch andere Möglichkeiten des Einbaus erschlossen werden. Übereinstimmende Merkmale mit dem vorhergehenden Ausführungsbeispiel sind mit denselben Bezugszeichen bezeichnet. Die Betätigung der Absperrorgane erfolgt hier mit einer gegenüber dem vorhergehenden Ausführungsbeispiel anders gestalteten Betätigungsspindel.

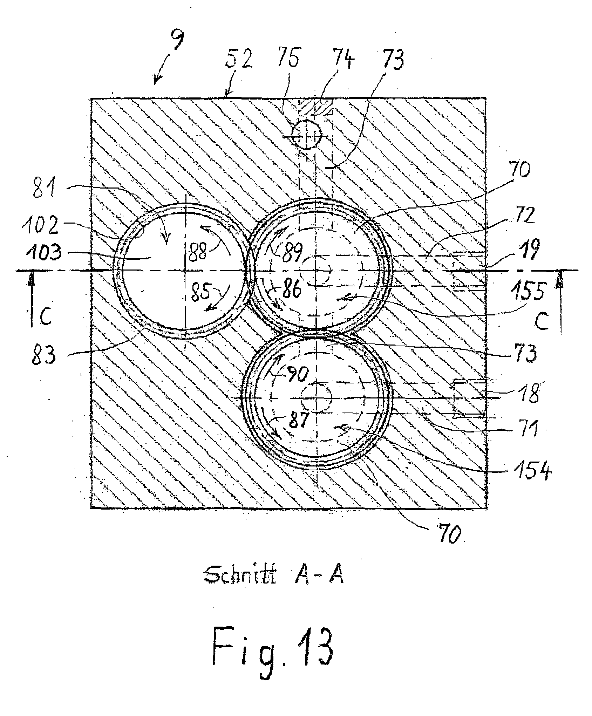

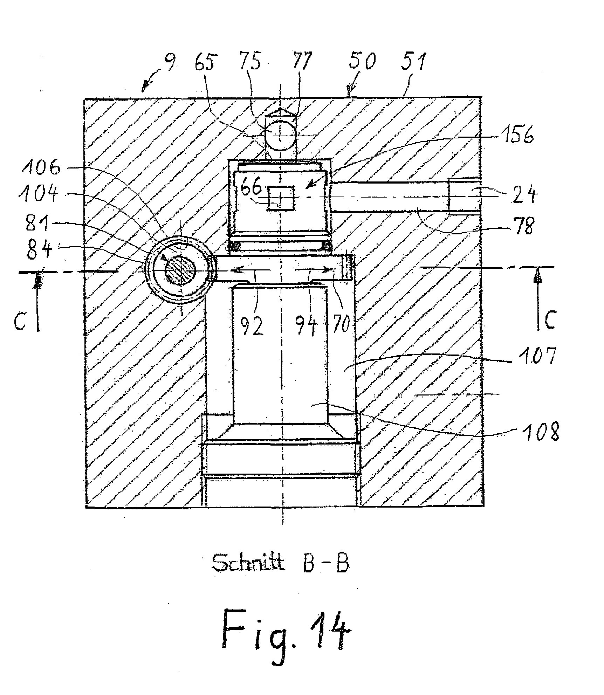

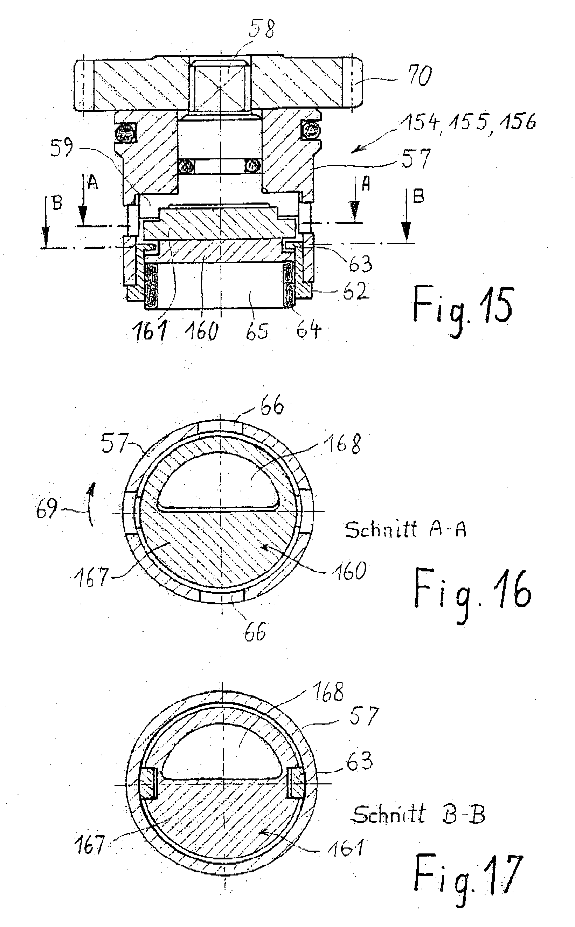

Figur 12 zeigt einen Längsschnitt durch das Einhebelmischgetriebe 9, entlang der Betätigungsspindel 81, wie er in den Figuren 13 und 14 mit C-C angedeutet wird. Die Betätigungsbereiche der Betätigungsspindel 81, die Verzahnung 83 zur Betätigung der Absperrorgane 154 und 155 in den Zuflüssen 18 bzw. 19 und die Zahnstange 84 zur Betätigung des Absperrorgans 156 im Mischwasserauslauf 24 befinden sich nicht mehr auf ein und demselben Walzenkörper, sondern sind getrennt voneinander, übereinander angeordnet. Dadurch sind wesentlich größere Schwenkwinkel zum Öffnen und Schließen der Absperrorgane in den Zuflüssen möglich. Dadurch ist es möglich, die Wassermenge und die Mischtemperatur wesentlich feiner abgestuft zu steuern. Gegenüber dem in den Figuren 5 bis 7 dargestellten Absperrorgan sind deshalb in den Absperrorganen der Zuflüsse und des Mischwasserauslaufs die Öffnungen in der Grundscheibe und in der Steuerscheibe anders gestaltet. Ein solches Absperrorgan und die in ihm enthaltenen Grund- und Steuerscheiben sind in den Figuren 15, 16 und 17 dargestellt.

Im vorliegenden Ausführungsbeispiel erfolgt die Betätigung der Absperrorgane 154, 155 und 156 des Einhebelmischgetriebes 9 ebenfalls manuell. Der mit der Betätigungsspindel 81 verbundene Stift 33 ist beispielsweise mit einer Verbindungsstange 8 (Fig. 1) oder mit einer Spirale mit biegsamer Welle 44 (Fig. 2) oder mit dem Betätigungshebel einer Wasserarmatur direkt verbunden (Fig. 20). Bei Betätigung des Betätigungshebels 7 oder 137 bzw. des Betätigungsgriffs 43 wird die Betätigungsspindel 81, wie durch den Pfeil 91 angedeutet, angehoben oder, wie durch den Pfeil 93 angedeutet, abgesenkt oder geschwenkt und überträgt diese Bewegungen auf die Absperrorgane.

Das Gehäuse 50 des Einhebelmischgetriebes 9 ist ebenfalls zweigeteilt. In dem Unterteil 52 sind die Absperrorgane 154 und 155 sowie in einer Ausbohrung 102 das Betätigungselement 103 mit einer Zahnrad-Verzahnung 83 angeordnet, das mit dem Zahnrad 70 auf dem Absperrorgan 155 im Eingriff steht. Das Zahnrad 70 auf dem Absperrorgan 155 befindet sich mit dem Zahnrad 70 auf dem Absperrorgan 154 im Eingriff. Die beschriebene Anordnung der genannten Funktionselemente ist aus Figur 13 ersichtlich, die die Ansicht des in Figur 12 eingezeichneten Schnittverlaufs A-A zeigt. Durch die Trennung der Verzahnungen 83 und 84 ist es möglich, den Schwenkbereich der zahnradartigen Verzahnung 83 zur Betätigung der Absperrorgane 154 und 155 in dem Heißwasserzufluss 18 bzw. Kaltwasserzufluss 19 wesentlich zu vergrößern, beispielsweise bis zu 180 Winkelgrade.

Der vergrößerte Schwenkbereich ermöglicht dem Bediener die Mischwassertemperatur wesentlich feinfühliger einzustellen, weil bei einem größeren Drehwinkel der Betätigungsspindel die Mischwassertemperatur weniger stark verändert wird. In der Sanitärbranche spricht man bei dieser Einstellmöglichkeit von "Komfortzone". Der gleiche Effekt lässt sich auch durch die Veränderung des Teilkreisdurchmessers der Verzahnung 83 erzielen, die sich mit den Zahnrädern 70 der Absperrorgane 154 und 155 im Eingriff befindet.

Wird der Teilkreisdurchmesser der Verzahnung 83 gegenüber dem Teilkreisdurchmesser der Zahnräder 70 der Absperrorgane 154 und 155 verkleinert, wird der Drehwinkel am Stift 33 größer, um die Absperrorgane vollständig zu Schließen bzw. zu öffnen.

Eine solche Veränderung der Teilkreisdurchmesser mit den entsprechenden Wirkungen ist auch bei dem Ausführungsbeispiel nach den Figuren 8 bis 11 möglich.

In Figur 13 liegt von rechts kommend unten der Heißwasserzufluss 18 und darüber der Kaltwasserzufluss 19. Auch in diesem Ausführungsbeispiel sind alle Wasserleitungen zu den einzelnen Funktionselementen als Bohrungen ausgeführt. Über die Bohrungen 71 bzw. 72 strömt das Wasser zu den jeweiligen Absperrorganen 154 bzw. 155. Um auch bei diesem Ausführungsbeispiel zu verhindern, dass bei unterschiedlichen Drücken in dem Heißwasserzufluss 18 und in dem Kaltwasserzufluss 19 das Wasser aus dem Zufluss mit dem höheren Druck in den Zufluss mit dem niedrigeren Druck überströmt, ist in der Bohrung 71 des Heißwasserzuflusses 18 und in der Bohrungen 72 des Kaltwasserzuflusses 19 jeweils ein Rückschlagventil eingebaut, wie durch das Symbol 110 angedeutet wird. Auch hier ist eine entsprechende Ansteuerung möglich, wie durch das Symbol 11 angedeutet und beim vorhergehenden Ausführungsbeispiel beschrieben.

Eine von außen in das Gehäuse 50 eingebrachte Bohrung 73, die am Austritt aus dem Gehäuse mit einem Stopfen 74 verschlossen ist, verbindet die Ausflussöffnungen der beiden Absperrorgane 154 und 155 und verbindet die Ausflussöffnungen des Absperrorgans 155 mit einer weiteren Bohrung 75, die das Wasser zum Absperrorgan 156 leitet, dem Absperrorgan zum Absperren und zum Steuern der Wassermenge, das senkrecht zu den beiden Absperrorganen 154 und 155, oberhalb von diesen, im Oberteil 51 angeordnet ist, wie in Figur 12 dargestellt. Es kann aber auch das Absperrorgan 154 über eine anders geführte Bohrung 75 mit dem Absperrorgan 156 verbunden werden.

In dem Oberteil 51 des Gehäuses 50 ist das Absperrorgan 156 angeordnet. Es wird mit dem Betätigungselement 104 mit der zahnstangenartigen Verzahnung 84 betätigt, die mit dem Zahnrad 70 auf dem Absperrorgan 156 im Eingriff steht. Bei einem Hub des Betätigungselements 104 in Pfeilrichtung 91 dreht sich das Zahnrad 70 in Pfeilrichtung 92 und das Absperrorgan 156 wird geöffnet, beim Absenken in Pfeilrichtung 93 dreht sich das Zahnrad 70 in Pfeilrichtung 94 und das Absperrorgan 156 wird geschlossen.

Die zahnstangenartige Verzahnung 84 des Betätigungselements 104 der Betätigungsspindel 81 umgibt den verlängerten Stift 33 vollständig. Das Betätigungselement 103 mit der Zahnrad-Verzahnung 83 muss die gleiche Länge haben wie die zahnstangenartige Verzahnung 84 des Betätigungselements 104, dessen Länge vom Hub der Einrichtung zur Betätigung des Einhebelmischgetriebes abhängig ist. Damit beim Hub der Betätigungsspindel in Pfeilrichtung 91 die Betätigungselemente 103 und 104 in das Oberteil 51 des Gehäuses 50 gehoben werden können, sind dort entsprechend geformte Ausbohrungen 105 bzw. 106 vorgesehen.

Figur 14 zeigt eine Ansicht des Schnitts B-B im Bereich des Absperrorgans 156 im Mischwasserauslauf 24 des Einhebelmischgetriebes 9. Eine von der Bohrung 75 abzweigende Bohrung 77 führt zur Zuflussöffnung 65 des Absperrorgans 156 und von dessen Ausflussöffnungen 66 in die Bohrung 78, die in den Mischwasserauslauf 24 des Einhebelmischgetriebes 9 mündet, der mit dem Auslauf der hier nicht dargestellten Wasserarmatur verbunden ist.

Das Absperrorgan 156 ist in eine Ausbohrung 107 des Oberteils 51 des Gehäuses 50 eingesetzt und wird durch einen in diese Ausbohrung 107 eingeschraubten Verschluss 108 in seiner Position gehalten.

Bei einer Betätigung der Absperrorgane 154, 155 und 156 mit Motore wird der mechanische Aufbau des Einhebelmischgetriebes wesentlich einfacher, wie bereits bei dem vorhergehenden Ausführungsbeispiel beschrieben. Die Betätigungsspindel 81 mit ihren Verzahnungen wäre dann überflüssig. Statt des Verschlusses 108 würde ein Motor direkt auf der Spindel des Absperrorgans 156 für die Mengenbegrenzung aufgesetzt. Das Zahnrad 70 entfällt. Das Zahnrad 70 des Absperrorgans 154 im Heißwasserzufluss 18 und das Zahnrad 70 des Absperrorgans 155 im Kaltwasserzufluss 19 würden in Eingriff gebracht und auf einer der Spindeln dieser Absperrorgane würde ein Motor aufgesetzt. Dieser Motor würde die Spindel des einen Absperrorgans betätigen, beispielsweise öffnen, und über die Zahnradverbindung das andere Absperrorgan im Gegensinn entsprechend schließen.

In Figur 15 ist eines der Absperrorgane 154, 155 und 156 der zweiten Bauart im Schnitt dargestellt. Auf Grund ihrer größeren Öffnungen in Steuer- und Grundscheibe eignet sich diese Bauart insbesondere für ein Einhebelmischgetriebe des letztgenannten Ausführungsbeispiels mit vergrößerten Schwenkbereichen für die Absperrorgane. Die mit dem Absperrorgan der ersten Bauart identischen Funktionselemente sind mit denselben Bezugszeichen versehen wie in den Figuren 5 bis 7. In einem Gehäuse 57 ist eine Spindel 58 gelagert. Auf die Spindel 58 ist das Zahnrad 70 zum Öffnen und Schließen des Absperrorgans aufgesetzt. Die mit der Spindel 58 verbundenen Mitnehmer 59 greifen in eine Steuerscheibe 160 aus Keramik ein. Diese überdeckt eine Grundscheibe 161, die mittels einer Buchse 62 mit Haltenocken 63 in das Gehäuse 57 eingesetzt ist. Eine in die Buchse 62 eingeschobene ringförmige Dichtung 64 stützt die Grundscheibe 161 und dichtet den Zuflussöffnung 65 gegenüber einer angeschlossenen Leitung ab. Bei geöffnetem Absperrorgan strömt das Wasser durch vier sich gegenüberliegende Ausflussöffnungen 66 aus dem Gehäuse 57.

Der Schnitt A-A in Figur 15 ist durch die Steuerscheibe 160 gelegt und in Figur 16 dargestellt. Der Schnitt B-B in Figur 15 ist durch die Grundscheibe 161 gelegt und in Figur 17 dargestellt. Die Steuerscheibe 160 und die Grundscheibe 161 haben eine übereinstimmende Gestalt. Beide Scheiben sind in zwei gleich große Segmente aufgeteilt. Während das eine Segment 167 geschlossen ist, weist das andere Segment einen sich über 180 Winkelgrade erstreckenden Durchbruch 168 auf. Wie aus den beiden Figuren 16 und 17 ersichtlich, ist das Absperrorgan geöffnet. Durch eine Drehung um 180 Winkelgrade, beispielsweise in Pfeilrichtung 69, kann das Absperrorgan geschlossen werden. In dieser Endstellung überdeckt das Segment 167 der Steuerscheibe 160 den Durchbruch 168 in der Grundscheibe 161. Bei der in den Figuren 5 bis 7 dargestellten Bauart des Absperrorgans ergeben die zwei Durchbrüche 68 in der Grundscheibe 61 ebenfalls eine Öffnung, die sich zusammen über 180 Winkelgrade erstreckt. Weil aber die Öffnungen jeweils auf Segmente von 90 Winkelgraden aufgeteilt sind, werden beim Schließvorgang beide Öffnungen gleichzeitig geschlossen und nach einer Schwenkbewegung von 90 Winkelgraden sind sie bereits geschlossen. Dadurch sind die Mengensteuerung und die Mischtemperatursteuerung gröber als bei der vorliegenden Bauart, weil sich bei dieser der Bereich, in der eine Steuerung möglich ist, verdoppelt.

Aus dem Stand der Technik ist es bekannt, Wasserarmaturen mit einer Thermostatregelung auszustatten. Nach einer Einstellung einer Mischwassertemperatur an einer Temperaturskala an der Wasserarmatur strömt beim Öffnen der Wasserarmatur immer Wasser mit der voreingestellten Temperatur aus. Bei Änderung der entnommenen Wassermenge, Druckschwankungen, Schwankungen der Wassermenge sowie Änderungen der Temperatur in den Zuflüssen wird durch entsprechende Eingriffe in den Heißwasser- oder den Kaltwasserzufluss die Mischwassertemperatur auf den Sollwert zurückgeführt.

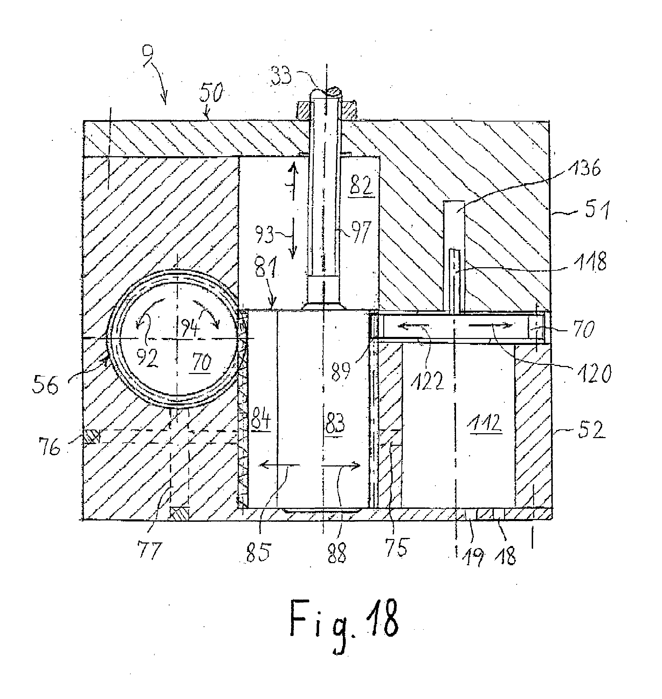

Das nachfolgend beschriebene und in Figur 18 dargestellte Ausführungsbeispiel eines Einhebelmischgetriebes 9 entspricht im Grundaufbau dem, das in den Figuren 8 bis 11 dargestellt ist. Die Figur 18 entspricht der Darstellung in der Figur 9, die den Schnitt J-K-L-M durch das Einhebelmischgetriebe in Figur 8 wiedergibt. Übereinstimmende Merkmale mit diesem Ausführungsbeispiel sind mit denselben Bezugszeichen bezeichnet. Im Gegensatz zu dem vorhergehenden Ausführungsbeispiel ist dieses mit einem thermostatgeregelten Stellglied mit Absperrfunktion 112 ausgestattet. Das bedeutet, dass weder in dem Heißwasserzufluss 18 noch in dem Kaltwasserzufluss 19 ein Absperrorgan angeordnet ist, das aus dem vorhergehenden Ausführungsbeispiel bekannt ist. Die Absperrorgane sind hier Ventilteller.

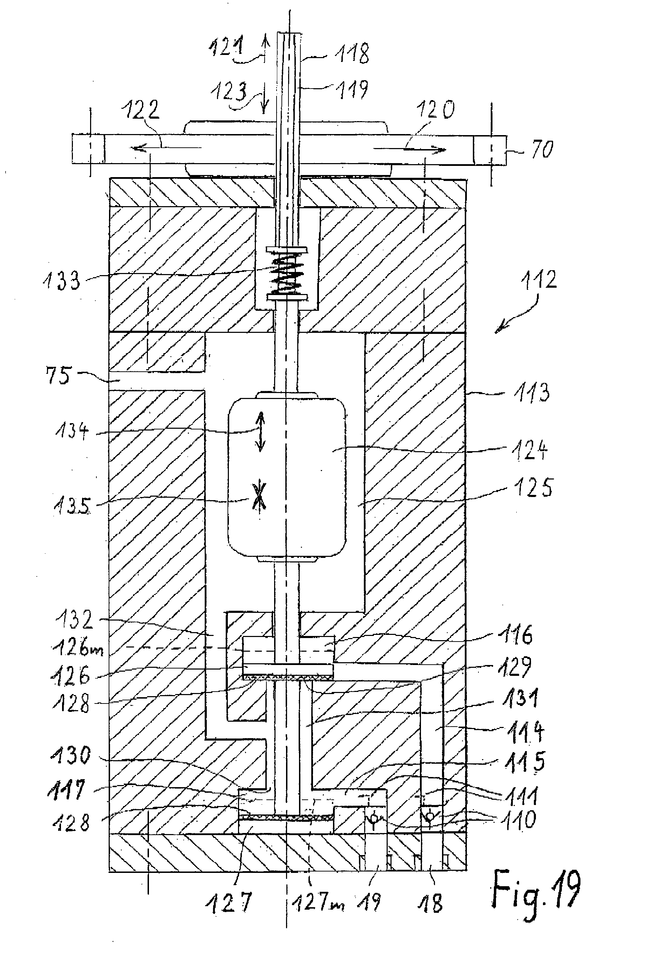

Der Aufbau des thermostatgeregelten Stellglieds mit Absperrfunktion 112 wird an Hand der Figur 19 mit Bezug auf Figur 18 erläutert. Diese Darstellung entspricht nicht einer Konstruktionszeichnung sondern soll nur die Funktionsweise verständlich machen. Der Aufbau des Stellglieds 112 ähnelt dem eines Zweidruckventils. In das Gehäuse 113 münden der Heißwasserzufluss 18 und der Kaltwasserzufluss 19. In beiden Zuflüssen ist auch hier ein Rückschlagventil 110 mit Ansteuerung 112 vorgesehen, um unkontrolliertes Überströmen von einem Zufluss in den anderen zu verhindern. Über Bohrungen 114 bzw. 115 wird das Heißwasser bzw. Kaltwasser in Kammern 116 bzw. 117 geleitet. In das Gehäuse 113 reicht eine Spindel 118, die in dem Bereich, der aus dem Gehäuse 113 ragt, mit einem Linksgewinde 119 versehen ist. Auf dieser Spindel 118 sitzt wie eine Mutter ein Zahnrad 70, das sich mit der Verzahnung 83 der Verstellspindel 81 im Eingriff befindet (Figur 18). Wird durch eine Schwenkbewegung einer Einrichtung zur Betätigung des Einhebelmischgetriebes die Verstellspindel 81 gedreht, wird über die Verzahnung 83 das Zahnrad 70 in entgegengesetzter Drehrichtung gedreht. Da das Zahnrad 70 in dem Gehäuse 50 des Einhebelmischgetriebes 9 ortsfest eingebaut ist, treibt das Zahnrad 70. als Mutter über das Gewinde 119 die Spindel 118 an.

Wird die Einrichtung zur Betätigung des Einhebelmischgetriebes einer Wasserarmatur nach links gedreht, um den Heißwasserzufluss zu vergrößern, dreht sich die Verzahnung 83 auf der Verstellspindel 81 in Pfeilrichtung 85 und treibt das Zahnrad 70 in Pfeilrichtung 120 an und die Spindel 118 wird mit Hilfe des Linksgewindes in Pfeilrichtung 121 aus dem Gehäuse 113 herausgehoben.

Wird die Einrichtung zur Betätigung des Einhebelmischgetriebes einer Wasserarmatur nach rechts gedreht, um den Kaltwasserzufluss zu vergrößern, dreht sich die Verzahnung 83 auf der Verstellspindel 81 in Pfeilrichtung 88 und treibt das Zahnrad 70 in Pfeilrichtung 122 an und die Spindel 118 wird in Pfeilrichtung 123 in das Gehäuse 113 hineingeschoben.

In die Spindel 118 ist ein zylindrischer Ausdehnungskörper 124 eingefügt, der an seinen Stirnseiten fest mit ihr verbunden ist. Der Ausdehnungskörper 124 ist in einer Kammer 125 des Gehäuses 113 frei beweglich angeordnet.

Die Fortsetzung der Spindel 118 reicht aus der Kammer 125 durch die Kammer 116 in die Kammer 117. In der Kammern 116 trägt die Spindel 118 einen Ventilteller 126 und in der Kammer 117 einen Ventilteller 127. Diese Ventilteller sind die Absperrorgane des vorliegenden Ausführungsbeispiels. Die Ventilteller sind auf ihren Dichtflächen mit einer Dichtung 128 belegt. Die Ventilteller 126 und 127 sind so auf der Spindel 118 angeordnet, dass sie die Ausflussöffnung 129 der Kammer 116 und die Ausflussöffnung 130 der Kammer 117 in die zwischen ihnen angeordnete Mischkammer 131 wechselseitig verschließen können. In der Mischkammer 131 werden die Wasserströme aus dem Heißwasserzufluss 18 und dem Kaltwasserzufluss 19 zum Mischwasser einer zuvor an der Einrichtung zur Betätigung des Einhebelmischgetriebes eingestellten Temperatur gemischt.

Im vorliegenden Ausführungsbeispiel ist die Situation dargestellt, dass der Ventilteller 126 in der Kammer 116 deren Ausflussöffnung 129 zur Mischkammer 131 verschließt und damit den Heißwasserzufluss 18 absperrt. Der Ventilteller 127 in der Kammer 117 dagegen hat die Ausflussöffnung 130 zur Mischkammer 131 vollständig geöffnet, so dass nur Kaltwasser von dem Kaltwasserzufluss 19 in die Mischkammer 131 strömt. Die Spindel 118 ist bei der maximalen Stellung der Einrichtung zur Betätigung des Einhebelmischgetriebes zur Kaltwasserabgabe vollständig in Pfeilrichtung 123 in das Gehäuse 113 hineingedreht worden.

Um das Kaltwasser mit Heißwasser zu mischen, muss die Ausflussöffnung 129 der Kammer 116 des Heißwasserzuflusses 18 geöffnet werden. Dazu muss die Spindel 118 in Pfeilrichtung 121 angehoben werden. Durch Linksdrehung der Einrichtung zur Betätigung des Einhebelmischgetriebes, in Richtung zur Erhöhung der Heißwasserabgabe, wird die Verstellspindel 81 in Pfeilrichtung 85 gedreht, wodurch das Zahnrad 70 des Stellglieds 112 in Pfeilrichtung 120 gedreht und über das Linksgewinde 119 die Spindel 118 in Pfeilrichtung 121 angehoben wird.

Befinden sich die beiden Ventilteller 126 bzw. 127 zwischen Öffnungs- und Schließstellung in ihrer Mittelstellung 126m bzw. 127m, sind die Ausflussöffnung 129 der Kammer 116 und die Ausflussöffnung 130 der Kammer 117 in die Mischkammer 131 gleich weit geöffnet. Bei gleicher Zuflussmenge und gleichbleibender Temperatur der Wasserströme von dem Heißwasserzufluss 18 und dem Kaltwasserzufluss 19 sind die Menge und die Temperatur des Mischwassers konstant, die über die Zuleitung 132 in die Kammer 125 geleitet wird, in der sich der Ausdehnungskörper 124 befindet, bevor es über die Bohrung 75 zum Absperrorgan 56 im Mischwasserauslauf 24 geleitet wird.

Auf der Wasserarmatur kann an der Einrichtung zur Betätigung des Einhebelmischgetriebes, im Bereich des Betätigungshebels 7 (Fig. 1) oder 137 (Fig. 20) oder des Betätigungsgriffs 43 (Fig. 2), eine Temperaturskala für die Einstellung der Mischwassertemperatur angebracht werden. Wird der Hebel auf diese Temperatur eingestellt, nimmt die Spindel 118 eine Stellung ein, mit der die beiden Ventilteller 126 und 127 so eingestellt werden, dass die Wasserströme aus dem Heißwasserzufluss 18 und dem Kaltwasserzufluss 19 in der Mischkammer 131 so miteinander gemischt werden, dass die an der Einrichtung zur Betätigung des Einhebelmischgetriebes eingestellte Mischwassertemperatur am Auslauf des Armaturenkörpers erreicht wird. Damit durch die Stellung der Ventilteller 126 und 127 ein Mischwasserstrom mit der jeweils eingestellten Temperatur erzeugt wird, ist an der Spindel 118 eine Justiervorrichtung 133 vorgesehen, an der durch Verkürzen oder Verlängern der Spindel die genaue Position der Ventilteller vor der Montage eingestellt werden kann.

Wenn der Druck in einem der Zuflüsse ansteigt, ändert sich die Menge des zufließenden Wassers, das eine bestimmte Temperatur hat. Dadurch wird die Temperatur des Mischwassers in der Mischkammer 131 verändert. Auch durch eine Änderung der Temperatur des zufließenden Wassers ändert sich die Mischwassertemperatur. Das Mischwasser mit der veränderten Temperatur fließt über die Zuleitung 132 in die Kammer 125 und umspült den Ausdehnungskörper 124. Durch die veränderte Temperatur des Mischwassers reagiert der Ausdehnungskörper 124. Bei zu hoher Temperatur des Mischwassers reagiert der Ausdehnungskörper 124 durch Ausdehnung, er verlängert sich, wie durch den Doppelpfeil 134 angezeigt wird. Da die Spindel 118 im Zahnrad 70 durch das Gewinde 119 gegen Verschieben blockiert ist, wird die Spindel 118, in Pfeilrichtung 123, in den Kammern 116 und 117 verschoben und verschiebt dadurch die Ventilteller 126 und 127. Der Ventilteller 126 wird in Richtung der Ausflussöffnung 129 der Kammer 116 geschoben und bremst dadurch den Zufluss von Heißwasser in die Mischkammer 131. Gleichzeitig wird die Ausflussöffnung 130 der Kammer 117 weiter geöffnet und es strömt von dem Kaltwasserzufluss 19 mehr Kaltwasser in die Mischkammer 131. Die Mischwassertemperatur erniedrigt sich dadurch, bis die vorgewählte Temperatur erreicht ist. Fällt die Temperatur des Mischwassers gegenüber dem eingestellten Wert, zieht sich der Ausdehnungskörper zusammen, wie durch den Doppelpfeil 135 angezeigt wird. Die Ventilteller 126 und 127 werden durch die Spindel 118 in Pfeilrichtung 121 angehoben und dadurch die Ausflussöffnung 129 mehr geöffnet und die Ausflussöffnung 130 mehr geschlossen. Diese Thermostatregelung sorgt vorteilhaft für eine konstante Mischwassertemperatur am Auslauf der Wasserarmatur. Bei einer zu hohen Mischwassertemperatur, die zur gesundheitlichen Gefährdung führen könnte, oder bei Ausfall des Kaltwasserzuflusses kann der Heißwasserzufluss sogar vollständig abgesperrt werden. Ein Überhitzungsschutz wird ausgelöst und der Ventilteller 126 wird beispielsweise durch eine Feder in der Justiervorrichtung 133 in Schließstellung gedrückt.

Figur 18 zeigt das Stellglied mit Absperrfunktion 112 in dem Einhebelmischgetriebe 9 eingebaut. Die Spindel 118, die über das Zahnrad 70 auf dem Stellglied 112 hinausreicht, ragt in eine Bohrung 136 in dem Oberteil 51 des Gehäuses 50 und kann sich dort entsprechend seiner Verstellbewegung auf und ab bewegen.

In Figur 20 ist ein Ausführungsbeispiel für die Gestaltung eines Armaturenkörpers einer Wasserarmatur in einer flach gehaltenen Ausführung dargestellt. Mit der in Figur 1 dargestellten Wasserarmatur 2 übereinstimmende Merkmale sind mit denselben Bezugszeichen bezeichnet. Wie ersichtlich, ist durch das Fehlen einer Kartusche im Armaturenkörper 4 eine sehr geringe Bauhöhe möglich. Die Wasserarmatur 2 ist hier ebenfalls auf einer Sanitäreinrichtung 1 aufgesetzt. Der Armaturenkörper 4 umfasst nur den Auslauf 5 und einen Betätigungshebel 137, der fest mit der Verbindungsstange 8 zur Betätigung des Einhebelmischgetriebes verbunden ist. Die Mündung des Auslaufs 5 ist nicht dargestellt, weil sich ihre Gestaltung danach richtet, ob sie beispielsweise in ein Becken, in eine Wanne oder in ein Bidet reicht.

Das Einhebelmischgetriebe, das hier nicht dargestellt ist, ist, wie in Figur 1, mit einem Verbindungsteil 29 an dem Sockel 26 des Armaturenkörpers 4 befestigt, der durch die Sanitäreinrichtung 1 reicht.

Im Gegensatz zum Ausführungsbeispiel nach Figur 1 ist bei diesem Ausführungsbeispiel der Wasserarmatur 2 der Betätigungshebel 137 zur Einstellung der Wassermenge nicht zu kippen. Auf Grund der festen Verbindung mit der Verbindungsstange 8 muss der Betätigungshebel 137 zum Öffnen des Absperrorgans in dem Mischwasserauslauf angehoben und zum Schließen abgesenkt werden, wie durch den Doppelpfeil 41 angedeutet wird. Die Einstellung der Temperatur des Mischwassers erfolgt dagegen wie üblich durch Schwenken des Betätigungshebels 137 nach rechts oder links, wie es durch den Doppelpfeil 42 angedeutet wird.

## Patentansprüche

1. Wasserarmatur (2) und Einhebelmischgetriebe (9) für die Wasserarmatur (2) zur Abgabe von Wasser in eine Sanitäreinrichtung (1), wobei die Wasserarmatur (2) einen der Sanitäreinrichtung (1) zugeordneten Armaturenkörper (4) mit einer Einrichtung (7, 43, 137) zur Betätigung des Einhebelmischgetriebes (9) umfasst und das Einhebelmischgetriebe einen Heißwasserzufluss (18) und einen Kaltwasserzufluss (19), Einrichtungen (54, 154; 55, 155; 126, 127) zum Öffnen und Schließen der Zuflüsse (18, 19) sowie zum Mischen und Begrenzen der Wasserströme und einen verschließbaren Mischwasserauslauf (24) enthält, der mit einem Auslauf (5) im Armaturenkörper (4) der Sanitäreinrichtung (1) verbunden ist, das Einhebelmischgetriebe (9) und der Armaturenkörper (4) voneinander räumlich getrennt sind, das Einhebelmischgetriebe (9) mit der Einrichtung (7, 43, 137) zur Betätigung des Einhebelmischgetriebes (9) über eine direkte mechanische Verbindung (8, 44) oder mittels elektrischer Antriebe betätigbar ist, **dadurch gekennzeichnet, dass** das Einhebelmischgetriebe (9) ein Absperrorgan (54, 154, 126) im Heißwasserzufluss (18) und ein Absperrorgan (55, 155, 127) im Kaltwasserzufluss (19) als Einrichtungen zum Öffnen und Schließen der Zuflüsse (18, 19) sowie ein Absperrorgan (56,156) zum Mischen und Begrenzen der Wasserströme enthält, dass das durch das Absperrorgan (54, 154, 126) im Heißwasserzufluss (18) und das durch das Absperrorgan (55, 155, 127) im Kaltwasserzufluss (19) einfließende Wasser als Mischwasser mit einer durch die Stellung der Einrichtung (7, 43, 137) zur Betätigung des Einhebelmischgetriebes (9) vorgegebenen Temperatur dem Absperrorgan (56, 156) als Einrichtung zum Öffnen und Schließen und zur Steuerung der abzugebenden Wassermenge aus dem Mischwasserauslauf (24) des Einhebelmischgetriebes (9) zuleitbar ist, dass die Einrichtung (7, 43, 137) zur Betätigung des Einhebelmischgetriebes (9) mit den drei Absperrorganen (54, 154; 55, 155; 126, 127; 56, 156) als Einrichtungen zum Öffnen und Schließen mechanisch gekoppelt ist oder als Steuerung der elektromotorischen Antriebe dieser Einrichtungen dient und dass das Absperrorgan (54, 154, 126) im Heißwasserzulauf (18) und das Absperrorgan (55, 155, 127) im Kaltwasserzulauf (19) nur gemeinsam zur proportional gegensätzlichen Steuerung der Menge des Wasserzuflusses betätigbar sind und dass das Absperrorgan (56, 156) zum Absperren und zur Mengensteuerung im Mischwasserauslauf (24) unabhängig von dem Absperrorgan (54, 154, 126) im Heißwasserzufluss (18) und dem Absperrorgan (55, 155, 127) im Kaltwasserzufluss (19) betätigbar ist.

2. Wasserarmatur (2) und Einhebelmischgetriebe nach Anspruch 1 **dadurch gekennzeichnet, dass** die Absperrorgane (54, 154; 55, 155; 56, 156) zwei aufeinander liegende, gegeneinander verdrehbare Keramikscheiben, eine Grundscheibe (61, 161) und eine Steuerscheibe (60, 160), mit gegenseitig verschließbaren Durchbrüchen (68, 168) zur Steuerung der Durchflussmenge und zum Absperren aufweisen und dass die Steuerscheibe (60, 160) mit einer sie betätigenden Spindel (58) verbunden ist.

3. Wasserarmatur (2) und Einhebelmischgetriebe nach Anspruch 1 **dadurch gekennzeichnet, dass** die Absperrorgane Ventilteller (126, 127) sind zum Öffnen, Verschließen und Steuern des Heißwasserzuflusses (18) und des Kaltwasserzuflusses (19) und dass diese Ventilteller (126, 127) mit einer sie betätigenden Spindel (118) verbunden sind.

4. Wasserarmatur (2) und Einhebelmischgetriebe nach Anspruch 2 oder 3 **dadurch gekennzeichnet, dass** mit der Spindel (58, 118) ein Zahnrad (70) verbunden ist und dass die Zahnräder (70) der Absperrorgane (54, 154; 55, 155; 56, 156; 126, 127) mit der Verzahnung (83, 84) einer Betätigungsspindel (81) als Einrichtung zum Betätigen der Absperrorgane im Eingriff stehen und dass die Betätigungsspindel (81) über den Stift (33) mit der Einrichtung (7, 43, 137) zur Betätigung des Einhebelmischgetriebes (9) in Verbindung steht.

5. Wasserarmatur (2) und Einhebelmischgetriebe nach Anspruch 4 **dadurch gekennzeichnet, dass** die Betätigungsspindel (81) durch die Einrichtung (7, 43, 137) zur Betätigung des Einhebelmischgetriebes (9) über eine mechanische Verbindung, insbesondere in Form einer Verbindungsstange (8) oder einer Spirale mit biegsamer Welle (44), betätigbar ist.

6. Wasserarmatur (2) und Einhebelmischgetriebe nach Anspruch 4 oder 5, **dadurch gekennzeichnet, dass** die Verzahnung (83) zur Betätigung der Absperrorgane (54, 154; 55, 155; 126, 127) in den Zuflüssen (18, 19) und die Verzahnung (84) zur Betätigung des Absperrorgans (56, 156) in dem Mischwasserauslauf (24) des Einhebelmischgetriebes (9) auf der Betätigungsspindel (81) getrennt voneinander angeordnet sind.

7. Wasserarmatur (2) und Einhebelmischgetriebe nach einem der Ansprüche 4 bis 6, **dadurch gekennzeichnet, dass** die Drehbewegung (42, 45) der Einrichtung (7, 43 137) zur Betätigung des Einhebelmischgetriebes (9) zur Einstellung der Mischtemperatur über die als Zahnrad ausgebildete Verzahnung (83) der Betätigungsspindel (81) auf mindestens ein Zahnrad (70) eines Absperrorgans (54, 154; 55, 155; 126, 127) im Zufluss (18; 19) des Einhebelmischgetriebes (9) übertragbar ist, das sich mit der Verzahnung (83) der Betätigungsspindel (81) im Eingriff befindet.

8. Wasserarmatur (2) und Einhebeimischgetriebe nach Anspruch 7 **dadurch gekennzeichnet, dass** die Verzahnung (83) der Betätigungsspindel (81) in die beiden Zahnräder (70) zur Betätigung der Absperrorgane der Zuflüsse (54, 154; 55, 155) eingreift.

9. Wasserarmatur (2) und Einhebelmischgetriebe nach Anspruch 7 **dadurch gekennzeichnet, dass** sich die beiden Zahnräder (70) der Absperrorgane (54, 154; 55, 155) der Zuflüsse (18; 19) im Eingriff befinden und sich die Verzahnung (83) der Betätigungsspindel (81) nur mit einem Zahnrad (70) zur Betätigung eines der Absperrorgane im Eingriff befindet.

10. Wasserarmatur (2) und Einhebelmischgetriebe nach Anspruch 7 **dadurch gekennzeichnet, dass** sich die Verzahnung (83) der Betätigungsspindel (81) mit dem Zahnrad (70) zur Betätigung der über die Spindel (118) miteinander verbundenen Ventilteller (126) und (127) als Absperrorgane der Zuflüsse (18) und (19) im Eingriff befindet.

11. Wasserarmatur (2) und Einhebelmischgetriebe nach einem der Ansprüche 4 bis 6, **dadurch gekennzeichnet, dass** für die Umsetzung der Schwenkbewegung (35, 46) bzw. Hubbewegung (41) der Einrichtung (7, 43, 137) zur Betätigung des Einhebelmischgetriebes (9) zur Mengenbegrenzung und zum An- und Abstellen des Mischwassers im Mischwasserauslauf (24) in eine Drehbewegung die Verzahnung (84) der Betätigungsspindel (81) als Zahnstange ausgebildet ist, die sich mit dem Zahnrad (70) zur Betätigung des Absperrorgans (56, 156) im Mischwasserauslauf (24) des Einhebelmischgetriebes (9) im Eingriff befindet.

12. Wasserarmatur (2) und Einhebelmischgetriebe, nach einem der Ansprüche 1 bis 3, **dadurch gekennzeichnet, dass** mit den Spindeln (58, 118) der Absperrorgane (54, 154; 55, 155; 56, 156; 126, 127) ein elektromotorischer Antrieb verbunden ist, der von der Einrichtung (7, 43, 137) zur Betätigung des Einhebelmischgetriebes (9) ansteuerbar ist.

13. Wasserarmatur (2) und Einhebelmischgetriebe nach einem der Ansprüche 1 bis 12, **dadurch gekennzeichnet, dass** im Auslauf (5) des Armaturenkörpers (4) oder im Mischwasserauslauf (24) ein Thermosensor zur Erfassung der Mischwässertemperatur angeordnet ist zur Regelung der motorischen Antriebe der Absperrorgane (54, 154, 55, 155) in den Zuflüssen (18, 19).

14. Wasserarmatur (2) und Einhebelmischgetriebe nach einem der Ansprüche 1 bis 12, **dadurch gekennzeichnet, dass** sich in dem Einhebelmischgetriebe (9) eine Mischwasserkammer (125) mit einem darin angeordneten Ausdehnungskörper (124) befindet und dass der Ausdehnungskörper (124) mit der die Ventilteller (126, 127) betätigenden Spindel (118) verbunden ist zur Konstanthaltung der Mischwassertemperatur durch Regulierung der jeweiligen Wasserströme im Heißwasserzufluss (18) und im Kaltwasserzufluss (19)

15. Wasserarmatur (2) und Einhebelmischgetriebe nach einem der Ansprüche 1 bis 14, **dadurch gekennzeichnet, dass** im Auslauf (5) des Armaturenkörpers (4) oder im Mischwasserauslauf (24) ein Durchflussmengensensor angeordnet ist zur Erfassung der Wassermenge und dass dieser Sensor mit dem motorischen Antrieb des Absperrorgans (56, 156) im Mischwasserauslauf (24) zur Regulierung der abströmenden Wassermenge verbunden ist.

16. Wasserarmatur (2) und Einhebelmischgetriebe nach einem der Ansprüche 1 bis 15, **dadurch gekennzeichnet, dass** in dem Heißwasserzufluss (18) und in dem Kaltwasserzufluss (19) jeweils ein Rückschlagventil (110) eingebaut ist.

17. Wasserarmatur (2) und Einhebelmischgetriebe nach Anspruch 16, **dadurch gekennzeichnet, dass** die Rückschlagventile (110) ansteuerbar sind (111), dass bei einer vollständigen Schließstellung der Einrichtung (7, 43, 137) zur Betätigung des Einhebelmischgetriebes (9) und damit bei einem geschlossenen Absperrorgan (56, 156) im Mischwasserauslauf (24) die Rückschlagventile (110) geschlossen sind und dass eine Freigabe der Rückschlagventile nur bei geöffnetem Absperrorgan (56, 156) im Mischwasserauslauf (24) möglich ist.

18. Wasserarmatur (2) und Einhebelmischgetriebe nach einem der Ansprüche 1 bis 17 **dadurch gekennzeichnet, dass** das Einhebelmischgetriebe (9) über ein Verbindungsteil (29) an der Sanitäreinrichtung (1) oder dem Armaturenkörper (4), unterhalb der Sanitäreinrichtung (1), befestigt ist.

19. Wasserarmatur (2) und Einhebelmischgetriebe nach Anspruch 18, **dadurch gekennzeichnet, dass** das Verbindungsteil (29), das das Einhebelmischgetriebe (9) trägt, an dem durch die Sanitäreinrichtung (1) hindurchreichenden Sockel (26) des Armaturenkörpers (4) befestigt ist.

20. Wasserarmatur (2) und Einhebeimischgetriebe nach Anspruch 18, **dadurch gekennzeichnet, dass** das Verbindungsteil (29), das das Einhebelmischgetriebe (9) trägt, durch die Sanitäreinrichtung (1) hindurchreicht und dass der Armaturenkörper (4) an dem Verbindungsteil (29) befestigt ist.

21. Wasserarmatur (2) und Einhebelmischgetriebe nach einem der Ansprüche 1 bis 17, **dadurch gekennzeichnet, dass** das Einhebelmischgetriebe (9) auf die Anschlüsse (22, 23) der Hausversorgung aufgesetzt ist.

22. Wasserarmatur (2) und Einhebelmischgetriebe nach einem der Ansprüche 1 bis 17, **dadurch gekennzeichnet, dass** das Einhebelmischgetriebe (9) unter Putz angeordnet ist.

## Claims

1. A water fitting (2) and single-lever mixing gear (9) for the water fitting (2) for dispensing water into a sanitary device (1), wherein the water fitting (2) comprises a fitting member (4) which is associated with the sanitary device (1) and which has a device (7, 43, 137) for actuating the single-lever mixing gear (9), and the single-lever mixing gear contains a hot-water supply flow (18) and a cold-water supply flow (19), devices (54, 154; 55, 155; 126, 127) for opening and closing the supply flows (18, 19) and for mixing and limiting the water streams and a closable mixed water outlet (24) which is connected to an outlet (5) in the fitting member (4) of the sanitary device (1), the single-lever mixing gear (9) and the fitting member (4) are spatially separated from each other, the single-lever mixing gear (9) can be actuated with the device (7, 43, 137) for actuating the single-lever mixing gear (9) via a direct mechanical connection (8, 44) or by means of electrical drives, **characterised in that** the single-lever mixing gear (9) contains a blocking member (54, 154, 126) in the hot-water supply flow (18) and a blocking member (55, 155, 127) in the cold-water supply flow (19) as devices for opening and closing the supply flows (18, 19) and also a blocking member (56, 156) for mixing and limiting the water streams, **in that** the water being introduced through the blocking member (54, 154, 126) in the hot-water supply flow (18) and the water being introduced through the blocking member (55, 155, 127) in the cold-water supply flow (19) can be supplied as mixed water having a temperature which is predetermined by the position of the device (7, 43, 137) for actuating the single-lever mixing gear (9) to the blocking member (56, 156) as a device for opening and closing and for controlling the quantity of water to be discharged from the mixed water outlet (24) of the single-lever mixing gear (9), **in that** the device (7, 43, 137) for actuating the single-lever mixing gear (9) is mechanically connected to the three blocking members (54, 154; 55, 155; 126, 127; 56, 156) as devices for opening and closing or acts as a control of the electromotive drives of these devices, and **in that** the blocking member (54, 154, 126) in the hot-water supply flow (18) and the blocking member (55, 155, 127) in the Cold-water supply flow (19) can only be actuated together for proportionally opposing control of the quantity of the water supply flow, and **in that** the blocking member (56, 156) for blocking and controlling the quantity in the mixed water outlet (24) can be actuated independently of the blocking member (54, 154, 126) in the hot-water supply flow (18) and the blocking member (55, 155, 127) in the cold-water supply flow (19).

2. A water fitting (2) and single-lever mixing gear according to claim 1, **characterised in that** the blocking members (54, 154; 55, 155; 56, 156) have two mutually rotatable ceramic plates which are located one on the other, a base plate (61, 161) and a control plate (60, 160), having mutually closable openings (68, 168) for controlling the flow quantity and for blocking, and **in that** the control plate (60, 160) is connected to a spindle (58) which actuates it.

3. A water fitting (2) and single-lever mixing gear according to claim 1, **characterised in that** the blocking members are valve discs (126, 127) for opening, closing and controlling the hot-vrater supply flow (18) and the cold-water supply flow (19), and **in that** these valve discs (126, 127) are connected to a spindle (118) which actuates them.

4. A water fitting (2) and single-lever mixing gear according to claim 2 or 3, **characterised in that** a toothed wheel (70) is connected to the spindle (58, 118), and **in that** the toothed wheels (70) of the blocking members (54, 154; 55, 155; 56, 156; 126, 127) are in engagement with the tooth arrangement (83, 84) of an actuation spindle (81) as a device for actuating the blocking members, and **in that** the actuation spindle (81) is connected to the device (7, 43, 137) for actuating the single-lever mixing gear (9) via the pin (33).

5. A water fitting (2) and single-lever mixing gear according to claim 4, **characterised in that** the actuation spindle (81) can be actuated by the device (7, 43, 137) for actuating the single-lever mixing gear (9) via a mechanical connection, in particular in the form of a connecting rod (8) or a helix member having a flexible shaft (44).

6. A water fitting (2) and single-lever mixing gear according to claim 4 or 5, **characterised in that** the tooth arrangement (83) for actuating the blocking members (54, 154; 55, 155; 126, 127) in the supply flows (18, 19) and the tooth arrangement (84) for actuating the blocking member (56, 156) in the mixed water outlet (24) of the single-lever mixing gear (9) are arranged on the actuation spindle (81) separately from each other.

7. A water fitting (2) and single-lever mixing gear according to any one of claims 4 to 6, **characterised in that** the rotational movement (42, 45) of the device (7, 43, 137) for actuating the single-lever mixing gear (9) for adjusting the mixing temperature via the tooth arrangement (83) of the actuation spindle (81) in the form of a toothed wheel can be transmitted to at least one toothed wheel (70) of a blocking member (54, 154; 55, 155; 126, 127) in the supply flow (18; 19) of the single-lever mixing gear (9) which is in engagement with the tooth arrangement (83) of the actuation spindle (81).

8. A water fitting (2) and single-lever mixing gear according to claim 7, **characterised in that** the tooth arrangement (83) of the actuation spindle (81) engages in the two toothed wheels (70) for actuating the blocking members of the supply flows (54, 154; 55, 155).

9. A water fitting (2) and single-lever mixing gear according to claim 7, **characterised in that** the two toothed wheels (70) of the blocking members (54, 154; 55, 155) of the supply flows (18; 19) are in engagement and the tooth arrangement (83) of the actuation spindle (81) is in engagement with only one toothed wheel (70) for actuating one of the blocking members.

10. A water fitting (2) and single-lever mixing gear according to claim 7, **characterised in that** the tooth arrangement (83) of the actuation spindle (81) is in engagement with the toothed wheel (70) for actuating the valve discs (126) and (127) which are connected to each other via the spindle (118) as blocking members of the supply flows (18) and (19).

11. A water fitting (2) and single-lever mixing gear according to any one of claims 4 to 6, **characterised in that** the tooth arrangement (84) of the actuation spindle (81) is in the form of a toothed rod which is in engagement with the toothed wheel (70) for actuating the blocking member (56, 156) in the mixed water outlet (24) of the single-lever mixing gear (9) for converting the pivot movement (35, 46) or lifting movement (41) of the device (7, 43, 137) for actuating the single-lever mixing gear (9) for limiting the quantity and for turning on and shutting off the mixed water in the mixed water outlet (24) into a rotational movement.

12. A water fitting (2) and single-lever mixing gear according to any one of claims 1 to 3, **characterised in that** an electromotive drive which can be controlled by the device (7, 43, 137) for actuating the single-lever mixing gear (9) is connected to the spindles (58, 118) of the blocking members (54, 154; 55, 155; 56, 156; 126, 127).

13. A water fitting (2) and single-lever mixing gear according to any one of claims 1 to 12, **characterised in that** a thermal sensor for detecting the mixed water temperature is arranged in the outlet (5) of the fitting member (4) or in the mixed water outlet (24) in order to control the motorised drives of the blocking members (54, 154, 55, 155) in the supply flows (18, 19).

14. A water fitting (2) and single-lever mixing gear according to any one of claims 1 to 12, **characterised in that** a mixed water chamber (125) having an expansion member (124) arranged therein is located in the single-lever mixing gear (9), and **in that** the expansion member (124) is connected to the spindle (118) which actuates the valve discs (126, 127) in order to keep the mixed water temperature constant by controlling the water streams in the hot-water supply flow (18) and in the cold-water supply flow (19), respectively.

15. A water fitting (2) and single-lever mixing gear according to any one of claims 1 to 14, **characterised in that** a flow quantity sensor is arranged in the outlet (5) of the fitting member (4) or in the mixed water outlet (24) in order to detect the water quantity, and **in that** this sensor is connected to the motorised drive of the blocking member (56, 156) in the mixed water outlet (24) in order to control the water quantity being discharged.

16. A water fitting (2) and single-lever mixing gear according to any one of claims 1 to 15, **characterised in that** a non-return valve (110) is fitted in the hot-water supply flow (18) and in the cold-water supply flow (19), respectively.

17. A water fitting (2) and single-lever mixing gear according to claim 16, **characterised in that** the non-return valves (110) can be controlled (111), **in that** the non-retuxn valves (110) are closed when the device (7, 43, 137) for actuating the single-levex mixing gear (9) is in a completely closed position and therefore when a blocking member (56, 156) in the mixed water outlet (24) is closed, and **in that** it is possible to release the non-return valves only when the blocking member (56, 156) in the mixed water outlet (24) is open.

18. A water fitting (2) and single-lever mixing gear according to any one of claims 1 to 17, **characterised in that** the single-lever mixing gear (9) is secured to the sanitary device (1) or the fitting member (4) via a connecting portion (29) below the sanitary device (1).

19. A water fitting (2) and single-lever mixing gear according to claim 18, **characterised in that** the connecting portion (29) which carries the single-lever mixing gear (9) is secured to the base (26) of the fitting member (4) extending through the sanitary device (1).

20. A water fitting (2) and single-lever mixing gear according to claim 18, **characterised in that** the connecting portion (29) which carries the single-lever mixing gear (9) extends through the sanitary device (1), and **in that** the fitting member (4) is secured to the connecting portion (29).

21. A water fitting (2) and single-lever mixing gear according to any one of claims 1 to 17, **characterised in that** the single-lever mixing gear (9) is positioned on the connections (22, 23) of the domestic supply system.

22. A water fitting (2) and single-lever mixing gear according to any one of claims 1 to 17, **characterised in that** the single-lever mixing gear (9) is arranged under plaster.

## Revendications

1. Robinet d'eau (2) et mitigeur à levier unique (9) pour le robinet d'eau (2) pour la distribution d'eau dans un équipement sanitaire (1), le robinet d'eau (2) comprenant un corps de robinet (4) associé à l'équipement sanitaire (1) et doté d'un dispositif (7, 43, 137) d'actionnement du mitigeur à levier unique (9), et le mitigeur à levier unique contenant une arrivée d'eau chaude (18) et une arrivée d'eau froide (19), des dispositifs (54, 154 ; 55, 155 ; 126, 127) pour ouvrir et fermer les arrivées (18, 19) ainsi que pour mélanger et limiter les débits d'eau, et une sortie d'eau mitigée (24) apte à être fermée, laquelle est reliée à une sortie (5) dans le corps de robinet (4) de l'équipement sanitaire (1), le mitigeur à levier unique (9) et le corps de robinet (4) étant séparés spatialement l'un de l'autre, le mitigeur à levier unique (9) avec le dispositif (7, 43, 137) d'actionnement du mitigeur à levier unique (9) pouvant être actionné par une liaison mécanique directe (8, 44) ou au moyen d'entraînements électriques, **caractérisé en ce que** le mitigeur à levier unique (9) contient un organe d'arrêt (54, 154, 126) dans l'arrivée d'eau chaude (18) et un organe d'arrêt (55, 155, 127) dans l'arrivée d'eau froide (19) comme dispositifs pour ouvrir et fermer les arrivées (18, 19) ainsi qu'un organe d'arrêt (56, 156) pour mélanger et limiter les débits d'eau, **en ce que** l'eau arrivant dans l'arrivée d'eau chaude (18) à travers l'organe d'arrêt (54, 154, 126) et l'eau arrivant dans l'arrivée d'eau froide (19) à travers l'organe d'arrêt (55, 155, 127) peuvent être amenées en tant qu'eau mitigée, à une température définie par la position du dispositif (7, 43, 137) d'actionnement du mitigeur à levier unique (9), à l'organe d'arrêt (56, 156) servant de dispositif pour ouvrir et fermer ainsi que pour commander le débit d'eau à délivrer par la sortie d'eau mitigée (24) du mitigeur à levier unique (9), **en ce que** le dispositif (7, 43, 137) d'actionnement du mitigeur à levier unique (9) est couplé mécaniquement aux trois organes d'arrêt (54, 154 ; 55, 155 ; 126, 127 ; 56, 156) servant de dispositifs pour ouvrir et fermer ou sert à commander les entraînements à moteur électrique de ces dispositifs, **en ce que** l'organe d'arrêt (54, 154, 126) dans l'arrivée d'eau chaude (18) et l'organe d'arrêt (55, 155, 127) dans l'arrivée d'eau froide (19) ne peuvent être actionnés qu'en commun pour commander de façon inversement proportionnelle le débit de l'arrivée d'eau, et **en ce que** l'organe d'arrêt (56, 156) servant à arrêter et commander le débit dans la sortie d'eau mitigée (24) peut être actionné indépendamment de l'organe d'arrêt (54, 154, 126) dans l'arrivée d'eau chaude (18) et de l'organe d'arrêt (55, 155, 127) dans l'arrivée d'eau froide (19).

2. Robinet d'eau (2) et mitigeur à levier unique selon la revendication 1, **caractérisé en ce que** les organes d'arrêt (54, 154 ; 55, 155 ; 56, 156) présentant deux disques en céramique superposés, pouvant tourner l'un par rapport à l'autre, un disque de base (61, 161) et un disque de commande (60, 160), dotés d'ouvertures (68, 168) réciproquement obturables pour commander et arrêter le débit, et **en ce que** le disque de commande (60, 160) est relié à une broche (58) qui l'actionne.

3. Robinet d'eau (2) et mitigeur à levier unique selon la revendication 1, **caractérisé en ce que** les organes d'arrêt sont des têtes de soupape (126, 127) servant à ouvrir, fermer et commander l'arrivée d'eau chaude (18) et l'arrivée d'eau froide (19), et **en ce que** ces têtes de soupape (126, 127) sont reliées à une broche (118) qui les actionne.

4. Robinet d'eau (2) et mitigeur à levier unique selon la revendication 2 ou 3, **caractérisé en ce qu'**une roue dentée (70) est reliée à la broche (58, 118), **en ce que** les roues dentées (70) des organes d'arrêt (54, 154 ; 55, 155 ; 56, 156 ; 126, 127) sont en prise avec la denture (83, 84) d'une broche d'actionnement (81) servant de dispositif pour actionner les organes d'arrêt, et **en ce que** 1a broche d'actionnement (81) est reliée par la tige (33) au dispositif (7, 43, 137) d'actionnement du mitigeur à levier unique (9).

5. Robinet d'eau (2) et mitigeur à levier unique selon la revendication 4, **caractérisé en ce que** la broche d'actionnement (81) peut être actionnée par le dispositif (7, 43, 137) d'actionnement du mitigeur à levier unique (9) par l'intermédiaire d'une liaison mécanique, en particulier sous la forme d'une tige de liaison (8) ou d'une spirale à axe flexible (44).

6. Robinet d'eau (2) et mitigeur à levier unique selon la revendication 4 ou 5, **caractérisé en ce que** la denture (83) d'actionnement des organes d'arrêt (54, 154 ; 55, 155 ; 126, 127) dans les arrivées (18, 19) et la denture (84) d'actionnement de l'organe d'arrêt (56, 156) dans la sortie d'eau mitigée (24) du mitigeur à levier unique (9) sont disposées séparément l'une de l'autre sur la broche d'actionnement (81).

7. Robinet d'eau (2) et mitigeur à levier unique selon une des revendications 4 à 6, **caractérisé en ce que**, pour régler la température de mélange, le mouvement de rotation (42, 45) du dispositif (7, 43, 137) d'actionnement du mitigeur à levier unique (9) peut être transmis par la denture (83) de la broche d'actionnement (81), réalisée sous la forme d'une roue dentée, à au moins une roue dentée (70), en prise avec la denture (83) de la broche d'actionnement (81), d'un organe d'arrêt (54, 154 ; 55, 155 ; 126, 127) dans l'arrivée (18 ; 19) du mitigeur à levier unique (9).

8. Robinet d'eau (2) et mitigeur à levier unique selon la revendication 7, **caractérisé en ce que** la denture (83) de la broche d'actionnement (81) est en prise avec les deux roues dentées (70) d'actionnement des organes d'arrêt des arrivées (54, 154 ; 55, 155).

9. Robinet d'eau (2) et mitigeur à levier unique selon la revendication 7, **caractérisé en ce que** les deux roues dentées (70) des organes d'arrêt (54, 154 ; 55, 155) des arrivées (18 ; 19) sont en prise, et la denture (83) de la broche d'actionnement (81) n'est en prise qu'avec une roue dentée (70) servant à actionner un des organes d'arrêt.

10. Robinet d'eau (2) et mitigeur à levier unique selon la revendication 7, **caractérisé en ce que** la denture (83) de la broche d'actionnement (81) est en prise avec la roue dentée (70) d'actionnement des têtes de soupes (126) et (127) reliées entre elles par la broche (118) et servant d'organes d'arrêt des arrivées (18) et (19).

11. Robinet d'eau (2) et mitigeur à levier unique selon une des revendications 4 à 6, **caractérisé en ce que**, pour convertir en un mouvement de rotation le mouvement de pivotement (35, 46), respectivement le mouvement de translation (41), du dispositif (7, 43, 137) d'actionnement du mitigeur à levier unique (9) pour limiter le débit et pour ouvrir et fermer l'eau mitigée dans la sortie d'eau mitigée (24), la denture (84) de la broche d'actionnement (81) est réalisée sous la forme d'une crémaillère qui est en prise avec la roue dentée (70) servant à actionner l'organe d'arrêt (56, 156) dans la sortie d'eau mitigée (24) du mitigeur à levier unique (9).

12. Robinet d'eau (2) et mitigeur à levier unique selon une des revendications 1 à 3, **caractérisé en ce qu'**un entraînement à moteur électrique, qui peut être commandé par le dispositif (7, 43, 137) d'actionnement du mitigeur à levier unique (9), est relié aux broches (58, 118) des organes d'arrêt (54, 154 ; 55, 155 ; 56, 156 ; 126, 127).

13. Robinet d'eau (2) et mitigeur à levier unique selon une des revendications 1 à 12, **caractérisé en ce qu'**un capteur thermique permettant de détecter la température d'eau mitigée est disposé dans la sortie (5) du corps de robinet (4) ou dans la sortie d'eau mitigée (24) pour réguler les entraînements motorisés des organes d'arrêt (54, 154, 55, 155) dans les arrivées (18, 19).

14. Robinet d'eau (2) et mitigeur à levier unique selon une des revendications 1 à 12, **caractérisé en ce qu'**une chambre d'eau mitigée (125) contenant un corps de dilatation (124) se trouve dans le mitigeur à levier unique (9), et **en ce que** le corps de dilatation (124) est relié à la tige (118) qui actionne les têtes de soupape (126, 127) pour maintenir constante la température d'eau mitigée par régulation des débits d'eau respectifs dans l'arrivée d'eau chaude (18) et dans l'arrivée d'eau froide (19).

15. Robinet d'eau (2) et mitigeur à levier unique selon une des revendications 1 à 14, **caractérisé en ce qu'**un capteur de débit permettant de détecter le débit d'eau est disposé dans la sortie (5) du corps de robinet (4) ou dans la sortie d'eau mitigée (24), et **en ce que** ce capteur est relié à l'entraînement motorisé de l'organe d'arrêt (56, 156) dans la sortie d'eau mitigée (24) pour réguler le débit d'eau sortant.

16. Robinet d'eau (2) et mitigeur à levier unique selon une des revendications 1 à 15, **caractérisé en ce qu'**un clapet antiretour (110) est monté dans l'arrivée d'eau chaude (18) et dans l'arrivée d'eau froide (19).

17. Robinet d'eau (2) et mitigeur à levier unique selon la revendication 16, **caractérisé en ce que** les clapets antiretour (110) sont commandables (111) de façon que, dans une position de fermeture complète du dispositif (7, 43, 137) d'actionnement du mitigeur à levier unique (9), et donc quand l'organe d'arrêt (56, 156) dans la sortie d'eau mitigée (24) est fermé, les clapets antiretour (110) soient fermés et qu'une ouverture des clapets antiretour ne soit possible que quand l'organe d'arrêt (56, 156) dans la sortie d'eau mitigée (24) est ouvert.

18. Robinet d'eau (2) et mitigeur à levier unique selon une des revendications 1 à 17 **caractérisé en ce que** le mitigeur à levier unique (9) est fixé à l'équipement sanitaire (1) ou au corps de robinet (4), au-dessous de l'équipement sanitaire (1), au moyen d'une pièce de liaison (29).

19. Robinet d'eau (2) et mitigeur à levier unique selon la revendication 18, **caractérisé en ce que** la pièce de liaison (29) qui porte le mitigeur à levier unique (9) est fixée au socle (26) du corps de robinet (4) qui s'étend à travers l'équipement sanitaire (1).

20. Robinet d'eau (2) et mitigeur à levier unique selon la revendication 18, **caractérisé en ce que** la pièce de liaison (29) qui porte le mitigeur à levier unique (9) traverse l'équipement sanitaire (1), et **en ce que** le corps de robinet (4) est fixé à la pièce de liaison (29).

21. Robinet d'eau (2) et mitigeur à levier unique selon une des revendications 1 à 17, **caractérisé en ce que** le mitigeur à levier unique (9) est monté sur les raccordements (22, 23) de l'alimentation domestique.

22. Robinet d'eau (2) et mitigeur à levier unique selon une des revendications 1 à 17, **caractérisé en ce que** le mitigeur à levier unique (9) est monté encastré.
